(19) **Europäisches Patentamt / European Patent Office / Office européen des brevets**

(11) **EP 4 604 520 A1**

(12) **EUROPEAN PATENT APPLICATION**
published in accordance with Art. 153(4) EPC

(43) Date of publication:
**20.08.2025 Bulletin 2025/34**

(21) Application number: **23877694.2**

(22) Date of filing: **12.10.2023**

(51) International Patent Classification (IPC):
**H04N 19/11** (2014.01)　　**H04N 19/593** (2014.01)
**H04N 19/186** (2014.01)　　**H04N 19/119** (2014.01)
**H04N 19/176** (2014.01)　　**H04N 19/70** (2014.01)
**H04N 19/96** (2014.01)

(52) Cooperative Patent Classification (CPC):
**H04N 19/11; H04N 19/119; H04N 19/176;
H04N 19/186; H04N 19/593; H04N 19/70;
H04N 19/96**

(86) International application number:
**PCT/KR2023/015692**

(87) International publication number:
**WO 2024/080771 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022　KR 20220130295**

(71) Applicant: **LG Electronics Inc.**
**Yeongdeungpo-gu**
**Seoul 07336 (KR)**

(72) Inventors:
• **CHOI, Jangwon**
　**Seoul 06772 (KR)**
• **LIM, Jaehyun**
　**Seoul 06772 (KR)**
• **YOO, Sunmi**
　**Seoul 06772 (KR)**
• **HONG, Myungoh**
　**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD BASED ON INTRA PREDICTION, METHOD FOR TRANSMITTING BITSTREAM, AND RECORDING MEDIUM STORING BITSTREAM**

(57)　An image encoding/decoding method and device are provided. The image decoding method according to the present disclosure may comprise the steps of: acquiring intra prediction mode information of a current block; determining an intra prediction mode of the current block on the basis of the intra prediction mode information; and performing intra prediction on the current block on the basis of the intra prediction mode, wherein the intra prediction mode information is determined differently on the basis of a slice type of the current block.

FIG. 16

START → OBTAIN INTRA PREDICTION MODE INFORMATION — S1610 → DETERMINE INTRA PREDICTION MODE OF CURRENT BLOCK BASED ON INTRA PREDICTION MODE INFORMATION — S1620 → PERFORM INTRA PREDICTION BASED ON INTRA PREDICTION MODE — S1630 → END

## Description

[Technical Field]

The present disclosure relates to an image encoding/decoding method based on intra prediction, a method for transmitting a bitstream, and a recording medium storing the bitstream, and more specifically, to an optimized intra prediction mode coding structure.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

The present disclosure is to provide an image encoding/decoding method and apparatus based on an optimized intra prediction mode coding structure.

The present disclosure is to provide an image encoding/decoding method and apparatus having a predetermined luma intra mode coding order based on mode selection probability.

The present disclosure is to provide an image encoding/decoding method and apparatus having an optimized intra prediction mode coding structure based on a slice type.

The present disclosure is to provide a non-transitory computer-readable recording medium for storing a bitstream generated by the image encoding method or apparatus according to the present disclosure.

The present disclosure is to provide a non-transitory computer-readable recording medium for storing a bitstream which is received and decoded by the image decoding apparatus according to the present disclosure and used for image reconstruction.

The present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to one aspect of the present disclosure is an image decoding method performed by an image decoding apparatus and may comprise obtaining intra prediction mode information of a current block, determining an intra prediction mode of the current block based on the intra prediction mode information, and performing intra prediction for the current block based on the intra prediction mode, wherein the intra prediction mode information may be differently determined based on a slice type of the current block.

An image decoding apparatus according to another aspect of the present disclosure may comprise a memory and at least one processor, wherein the at least one processor may obtain intra prediction mode information of a current block, determine an intra prediction mode of the current block based on the intra prediction mode information, and perform intra prediction for the current block based on the intra prediction mode, wherein the intra prediction mode information may be differently determined based on a slice type of the current block.

An image encoding method according to another aspect of the present disclosure may comprise determining an intra prediction mode of a current block, performing intra prediction for the current block based on the intra prediction mode, and encoding information on the intra prediction mode, wherein the information on the intra prediction mode may be differently determined based on a slice type of the current block.

A computer-readable recording medium according to another aspect of the present disclosure may store a bitstream generated by the image encoding method or the image encoding apparatus of the present disclosure.

A transmission method according to another embodiment of the present disclosure may transmit a bitstream generated by the image encoding apparatus or the image encoding method of the present disclosure.

The features of the present disclosure briefly summarized above are merely exemplary embodiments described in detail below and are not intended to limit the range of the present disclosure.

[Advantageous Effects]

According to the present disclosure, an image encoding/decoding method and apparatus with improved encoding/decoding efficiency may be provided.

According to the present disclosure, an image encoding/decoding method and apparatus based on motion information refinement may be provided.

According to the present disclosure, an image encoding method and apparatus based on an optimized intra prediction mode coding structure may be provided.

According to the present disclosure, an image encoding method and apparatus having a predetermined luma intra mode coding order based on mode selection probability may be provided.

According to the present disclosure, an image encoding method and apparatus having an optimized intra prediction mode coding structure based on a slice type may be provided.

According to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 shows a flowchart of an example of an intra prediction mode signaling method in an encoding apparatus.

FIG. 5 shows a flowchart of an example of an intra prediction mode determination method in a decoding apparatus.

FIG. 6 shows a diagram of an example of neighboring blocks used for deriving an MPM list.

FIG. 7 shows a diagram of an example of neighboring reconstructed samples used for a DIMD chroma mode.

FIG. 8 shows a diagram for explaining an MDM mode.

FIG. 9 shows a diagram of the positions of neighboring samples used for deriving a CCLM parameter.

FIG. 10 shows a diagram of four Sobel-based gradient patterns for GLM.

FIG. 11 shows a diagram of the coding structure of a luma intra prediction mode.

FIG. 12 shows a diagram of the coding structure of a chroma intra prediction mode.

FIG. 13 shows a diagram of the coding structure of a luma intra prediction mode according to an embodiment of the present disclosure.

FIG. 14A and FIG. 14B show diagrams of the coding structure of a chroma intra prediction mode according to an embodiment of the present disclosure.

FIG. 15A and FIG. 15B show diagrams of the coding structure of a chroma intra prediction mode according to another embodiment of the present disclosure.

FIG. 16 shows a flowchart of an image decoding method according to an embodiment of the present disclosure.

FIG. 17 shows a flowchart of an image decoding method according to an embodiment of the present disclosure.

FIG. 18 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar drawing symbols have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

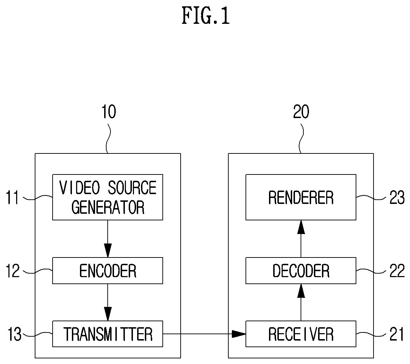

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

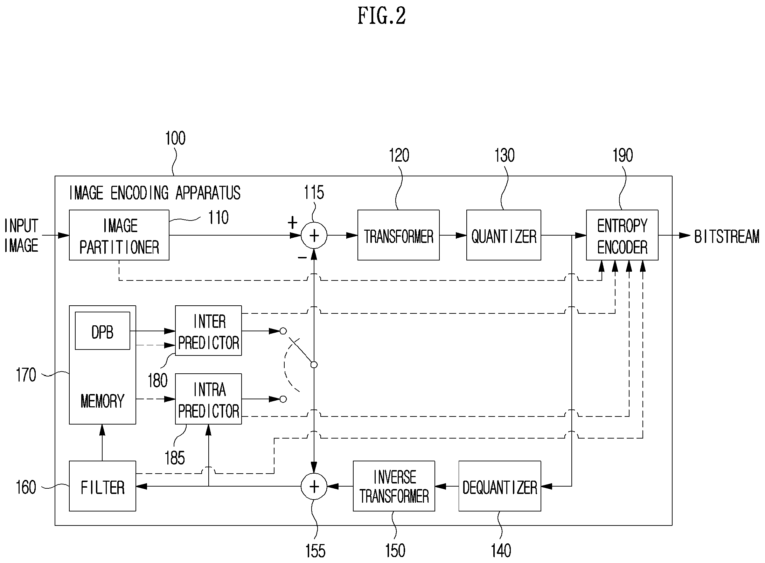

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT).

Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

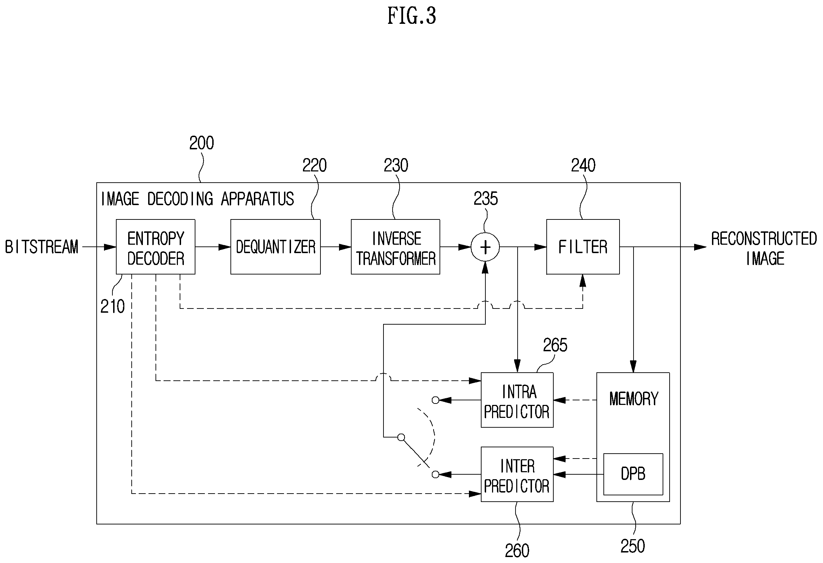

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture recon struction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/i mage/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

### Intra Prediction Mode/Type Determination

When intra prediction is applied, an intra prediction mode to be applied to a current block may be determined by using intra prediction mode of a neighboring block. For example, a decoding apparatus may select one of most probable mode (MPM) candidates within an MPM list, which is derived based on the intra prediction mode of a neighboring block (e.g., left and/or above neighboring block) of the current block and additional candidate modes, based on a received MPM index. Alternatively, one of remaining intra prediction modes, which are not included in the MPM candidates (and a planar mode), may be selected based on remaining intra prediction mode information. The MPM list may be configured to include or exclude the planar mode as a candidate. For example, when the MPM list includes the planar mode as a candidate, the MPM list may have six candidates, and when the MPM list excludes the planar mode as a candidate, the MPM list may have three candidates. When the MPM list excludes the planar mode as a candidate, a not planar flag (i.e., intra_luma_not_planar_flag) indicating whether the intra prediction mode of the current block is not the planar mode may be signaled. For example, an MPM flag may be signaled first, and the MPM index and the not planar flag may be signaled when the value of the MPM flag is 1. In addition, the MPM index may be signaled when the value of the not planar flag is 1. Here, the configuration in which the MPM list excludes the planar mode as a candidate does not mean that the planar mode is not considered as an MPM, but rather, since the planar mode is always considered as an MPM, the not planar flag is signaled first to determine whether the mode is the planar mode first.

For example, whether the intra prediction mode applied to the current block is among the MPM candidates (and the planar mode) or among the remaining mode may be indicated based on an MPM flag (e.g., intra_luma_mpm_flag). A value of 1 for the MPM flag may indicate that the intra prediction mode for the current block is within the MPM candidates (and the planar mode), and a value of 0 for the MPM flag may indicate that the intra prediction mode for the current block is not within the MPM candidates (and the planar mode). A value of 0 for the not planar flag (i.e., intra_luma_not_planar_flag) may indicate that the intra prediction mode for the current block is the planar mode, and a value of 1 for the not planar flag may indicate that the intra prediction mode for the current block is not the planar mode. The MPM index may be signaled in the form of a syntax element such as mpm_idx or intra_luma_mpm_idx, and the remaining intra prediction mode information may be signaled in the form of a syntax element such as rem_intra_luma_pred_mode or intra_luma_mpm_remainder. For example, the remaining intra prediction mode information may indicate one of the remaining intra prediction modes that are not included in the MPM candidates (and the planar mode), indexed in order of prediction mode numbers among all intra prediction modes. The intra prediction mode may be an intra prediction mode for a luma component (sample). Hereinafter, the intra prediction mode information may include at least one of the MPM flag (i.e., intra_luma_mpm_flag), the not planar flag (i.e., intra_lumanot_planar_flag), the MPM index (i.e., mpm_idx or intra_luma_mpm_idx), and the remaining intra prediction mode information (i.e., rem_intra_luma_pred_mode or intra_luma_mpm_remainder). In present disclosure, the MPM list may also be referred to by various terms such as MPM candidate list or candModeList. When MIP is applied to the current block, a separate MPM flag (i.e., intra_mip_mpm_flag), MPM index (i.e., intra_mip_mpm_idx), and remaining intra prediction mode information (i.e., intra_mip_mpm_remainder) for MIP may be signaled, and the not planar flag may not be signaled.

The intra prediction mode signaling procedure in the encoding apparatus and the intra prediction mode determination procedure in the decoding apparatus may be performed as an example below.

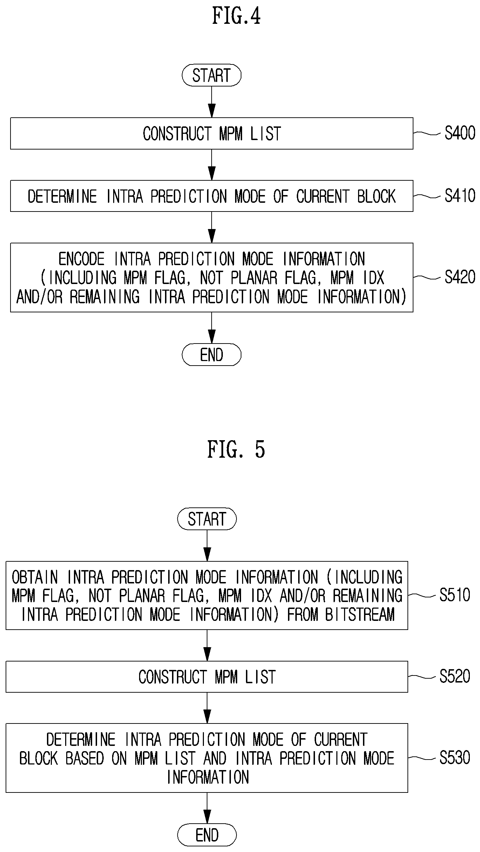

FIG. 4 shows a flowchart of an example of an intra prediction mode signaling method in an encoding apparatus.

Referring to FIG. 4, the encoding apparatus constructs an MPM list for a current block S400. The MPM list may include candidate intra prediction modes (MPM candidates) that have a high possibility of being applied to the current block. The MPM list may include intra prediction mode of a neighboring block, and may additionally include specific intra prediction modes according to a predetermined method. The specific method for configuring the MPM list will be described later.

The encoding apparatus determines an intra prediction mode of the current block S410. The encoding apparatus may perform prediction based on various intra prediction modes and may determine an optimal intra prediction mode based on ratedistortion optimization (RDO). In this case, the encoding apparatus may determine the optimal intra prediction mode by using only the MPM candidates included in the MPM list and the planar mode, or may determine the optimal intra prediction mode by additionally using the remaining intra prediction modes in addition to the MPM candidates included in the MPM list and the planar mode. Specifically, for example, when the intra prediction type of the current block is a specific type (i.e., LIP, MRL, or ISP) rather than a normal intra prediction type, the encoding apparatus may determine the optimal intra prediction mode by considering only the MPM candidates and the planar mode as the intra prediction mode candidates for the current block. In other words, in this case, the intra prediction mode for the current block may be determined only from among the MPM candidates and the planar mode, and the MPM flag may not be encoded/signaled in this case. The decoding apparatus, in this case, may estimate that the MPM flag is 1 without receiving the MPM flag separately.

Meanwhile, in general, when the intra prediction mode of the current block is not the planar mode and is one of the MPM candidates in the MPM list, the encoding apparatus generates an MPM index (mpm idx) indicating one of the MPM candidates. When the intra prediction mode of the current block is not included in the MPM list either, the encoding apparatus generates remaining intra prediction mode information that indicates a mode among the remaining intra prediction modes not included in the MPM list (and the planar mode), which is the same as the intra prediction mode of the current block.

The encoding apparatus may encode the intra prediction mode information and output it in the form of a bitstream. The intra prediction mode information may include the above-described MPM flag, not planar flag, MPM index, and/or remaining intra prediction mode information. In general, the MPM index and the remaining intra prediction mode information are in an alternative relationship and may not be signaled simultaneously for indicating the intra prediction mode of a block. In other words, the MPM flag value 1 may be signaled along with the not planar flag or the MPM index, and the MPM flag value 0 may be signaled along with the remaining intra prediction mode information. However, as described above, when a specific intra prediction type is applied to the current block, the MPM flag may not be signaled, and only the not planar flag and/or the MPM index may be signaled. In other words, in this case, the intra prediction mode information may include only the not planar flag and/or the MPM index.

The decoding apparatus may determine an intra prediction mode corresponding to the intra prediction mode information determined and signaled by the encoding apparatus.

FIG. 5 shows a flowchart of an example of an intra prediction mode determination method in a decoding apparatus.

Referring to FIG. 5, the decoding apparatus obtains intra prediction mode information from a bitstream S500. The intra prediction mode information may include at least one of an MPM flag, a not planar flag, an MPM index, and remaining intra prediction mode, as described above.

The decoding apparatus constructs an MPM list S510. The MPM list is configured in the same manner as the MPM list configured by the encoding apparatus. In other words, the MPM list may include an intra prediction mode of a neighboring block and may further include specific intra prediction modes according to a predetermined method. The specific method for configuring the MPM list will be described later.

Although S510 is illustrated as being performed after S500, this is merely an example, and S510 may be performed before or simultaneously with S500.

The decoding apparatus determines an intra prediction mode of the current block based on the MPM list and the intra prediction mode information S520. As an example, when the value of the MPM flag is 1, the decoding apparatus may derive the planar mode as the intra prediction mode of the current block (based on the not planar flag), or may derive a candidate indicated by the MPM index among the MPM candidates in the MPM list as the intra prediction mode of the current block. In another example, when the value of the MPM flag is 0, the decoding apparatus may derive an intra prediction mode indicated by the remaining intra prediction mode information from among the remaining intra prediction modes not included in the MPM list and the planar mode as the intra prediction mode of the current block. Meanwhile, in another example, when the intra prediction type of the current block is a specific type (i.e., LIP, MRL, IST, etc.), the decoding apparatus may derive, without checking the MPM flag, the planar mode or a candidate indicated by the MPM index in the MPM list as the intra prediction mode of the current block.

For example, the not planar flag may be signaled when MRL is not applied to the current block (i.e., when intra_luma_ref_idx == 0), and the not planar flag may be omitted when MRL is applied to the current block (i.e., when intra_luma_ref_idx != 0). When the not planar flag is omitted, its value may be estimated as 1 by the decoding apparatus.

Meanwhile, intra prediction modes may include two directional intra prediction modes and 65 directional prediction modes. The non-directional intra prediction modes may include a planar intra prediction mode and a DC intra prediction mode, and the directional intra prediction modes may include intra prediction modes numbered from 2 to 66. The extended directional intra prediction mode may be applied to blocks of all sizes and may be applied to both luma and chroma components.

Meanwhile, in addition to the intra prediction modes described above, the intra prediction mode may further include a cross-component linear model (CCLM) mode for a chroma sample. The CCLM mode may be classified into LT_CCLM, L_CCLM, and T_CCLM depending on whether left samples, top samples, or both are considered for deriving a LM parameter, and it may be applied only to a chroma component.

The intra prediction modes, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, and MIP, as described above. The intra prediction type may be indicated based on intra prediction type information, and the intra prediction type information may be implemented in various forms. As an example, the intra prediction type information may include intra prediction type index information indicating one of the intra prediction types. In another example, the intra prediction type information may include at least one of reference sample line information (i.e., intra_luma_ref_idx) indicating whether MRL is applied to the current block and, when applied, which reference sample line is used, an ISP flag (i.e., intra_subpartitions_mode_flag) indicating whether ISP is applied to the current block, ISP type information (i.e., intra_subpartitions_split_flag) indicating a split type of subpartitions when ISP is applied, a flag information indicating whether PDPC is applied, or a flag information indicating whether LIP is applied. In addition, the intra prediction type information may include an MIP flag (which may be referred to as intra_mip_flag) indicating whether MIP is applied to the current block.

Meanwhile, as described above, when MIP is applied to the current block (i.e., when the value of intra_mip_flag is 1), an MPM list for MIP may be separately configured, and the intra prediction mode information for MIP may include an MPM flag referred to as intra_mip_mpm_flag, an MPM index referred to as intra_mip_mpm_idx, and remaining intra prediction mode information referred to as intra_mip_mpm_remainder.

In addition, various prediction modes may be used for MIP, and a matrix and an offset for MIP may be derived based on the intra prediction mode for MIP. As described above, the matrix may be referred to as a (MIP) weight matrix, and the offset may be referred to as a (MIP) offset vector or a (MIP) bias vector. The number of intra prediction modes for MIP may be differently set based on the size of the current block. For example, i) when the height and width of the current block (i.e., CB or TB) are both 4, 35 intra prediction modes (i.e., intra prediction mode 0 to 34) may be available, ii) when both the height and width of the current block are equal to or less than 8, 19 intra prediction modes (i.e., intra prediction mode 0 to 18) may be available, iii) in other cases, 11 intra prediction modes (i.e., intra prediction mode 0 to 10) may be available. For example, when the height and width of the current block are both 4, it may be referred to as block size type 0, when both the height and width of the current block are equal to or less than 8, it may be referred to as block size type 1, and in other cases, it may be referred to as block size type 2, and the number of intra prediction modes for MIP may be organized in the following table. However, this is merely an example, and the block size type and the number of available intra prediction modes may be changed. In the present disclosure, the intra prediction mode for MIP may be referred to as an MIP intra prediction mode, an MIP prediction mode, or an MIP mode.

[Table 2]

| block size type (MipSizeId) | number of MIP intra prediction modes | MIP intra prediction mode |
|---|---|---|
| 0 | 35 | 0...34 |
| 1 | 19 | 0...18 |
| 2 | 11 | 0...10 |

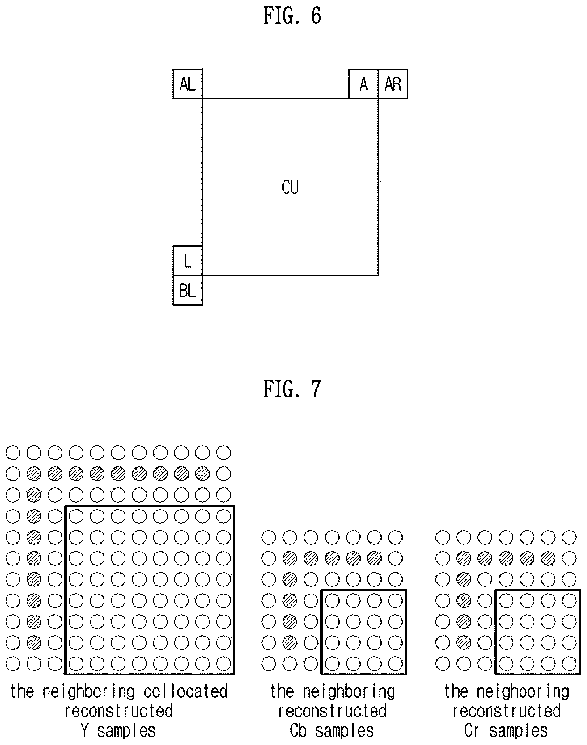

Meanwhile, in an enhanced compression model (ECM), a secondary MPM list has been introduced. The conventional primary MPM (PMPM) list includes six entries, and the secondary MPM (SMPM) list includes sixteen entries. First, a general MPM list having twenty-two entries is configured, and the first six entries in the general MPM list are included in the PMPM list, while the remaining entries are included in the SMPM list. The first entry in the general MPM list is a planar mode, and the remaining entries are composed of intra modes of neighboring blocks on the left (L), above (A), below-left (BL), above-right (AR), and above-left (AL) \, directional modes to which offsets are added from the first two available directional modes of the neighboring blocks, and a default mode, as described in FIG. 6.

When a CU block is in a vertical direction, the order of neighboring blocks may be above (A), left (L), below-left (BL), above-right (AR), and above-left (AL). Otherwise, the order may be left (L), above (A), below-left (BL), above-right (AR), and above-left (AL).

A PMPM flag is parsed, and when its value is 1, a PMPM index may be parsed to determine which entry in the PMPM list is selected. Otherwise, an SPMPM flag may be parsed to determine whether to parse an SPMPM index or remaining modes.

## Intra Prediction Mode/Type based Prediction Sample Derivation

A predictor of an encoding apparatus/decoding apparatus may derive a reference sample from an intra prediction mode of a current block among neighboring reference samples of a current block, and may generate a prediction sample of the current block based on the reference sample.

For example, (i) a prediction sample may be derived based on an average or interpolation of neighboring reference samples of a current block, and (ii) the prediction sample may be derived based on a reference sample located in a specific (prediction) direction among the neighboring reference samples of the current block. Case (i) may be referred to as a non-directional mode or a non-angular mode, and case (ii) may be referred to as a directional mode or an angular mode. In addition, the prediction sample may be generated by interpolation between a first neighboring sample and a second neighboring sample, the second neighboring sample being located in a direction opposite to the prediction direction of the intra prediction mode of the current block with respect to the prediction sample of the current block among the neighboring reference samples. The above-described case may be referred to as linear interpolation intra prediction (LIP). Additionally, a temporary prediction sample of the current block may be derived based on filtered neighboring reference samples, and a prediction sample of the current block may be derived by performing a weighted sum of the temporary prediction sample and at least one reference sample, derived by the intra prediction mode, among the conventional neighboring reference samples, in other words, unfiltered neighboring reference samples. The above-described case may be referred to as position dependent intra prediction (PDPC). In addition, among neighboring multiple reference sample line of the current block, a reference sample line with the highest prediction accuracy may be selected, and a prediction sample may be derived by using a reference sample located in the prediction direction on the selected line, and in this case, the intra prediction encoding may be performed by signaling the used reference sample line to the decoding apparatus. The above-described case may be referred to as multi-reference line intra prediction (MRL) or MRL-based intra prediction. Additionally, the current block may be divided into vertical or horizontal subpartitions, and intra prediction may be performed based on the same intra prediction mode, while neighboring reference samples may be derived and used in the subpartition unit. In this case, the intra prediction mode of a current block is applied in the same manner to the subpartitions, intra prediction performance may be improved by deriving and using a neighboring reference sample in the subpartition unit. This prediction method may be referred to as intra sub-partitions (IPS) or IPS-based intra prediction. Detailed description will be described later. In addition, when a prediction direction based on a prediction sample points the position between the neighboring reference samples, in other words, when the prediction direction points to a fractional sample position, a value of the prediction sample may be derived through interpolation of a plurality of reference samples located around the corresponding prediction direction (i.e., corresponding fractional sample position neighbor).

The above-described intra prediction methods may be referred to as intra prediction type, distinguished from intra prediction mode. The intra prediction type may also be referred to by various terms such as intra prediction technique or additional intra prediction mode. For example, the intra prediction type (or additional intra prediction mode, etc.) may include at least one of the above-described LIP, PDPC, MRL, or ISP. Information on the intra prediction type may be encoded by an encoding apparatus and included in a bitstream to be signaled to a decoding apparatus. The information on the intra prediction type may be implemented in various forms, such as flag information indicating whether each intra prediction type is applied, or index information indicating one of intra prediction type among multiple intra prediction types.

The MPM list for deriving the above-described intra prediction mode may be configured differently according to the intra prediction type. Alternatively, the MPM list may be commonly configured regardless of the intra prediction type.

### (1) Linear interpolation intra prediction (LIP)

In linear interpolation prediction, right-side neighboring samples and bottom neighboring samples of the current block may be generated, and a prediction sample may be generated through interpolation between a first neighboring sample, which is located in the prediction direction of an intra prediction mode of the current block with respect to the prediction sample of the current block among neighboring samples of the current block, and a second neighboring sample, which corresponds to the first neighboring sample among the neighboring samples. In other words, the prediction sample may be generated through interpolation between the second neighboring sample, which is located in the direction opposite to the prediction direction of the intra prediction mode of the current block with respect to the prediction sample of the current block among the neighboring samples, and the first neighboring sample.

In order to perform linear interpolation prediction, as described above, a right sample buffer and a bottom sample buffer need to be generated. To this end, a bottom right (BR) sample may be first generated using a neighboring reference sample. In one example, the bottom right sample may be generated using a top right sample and a bottom left sample. In another example, the bottom right sample may be generated using a most top right sample and a most bottom left sample, which are located at a distance twice the length of the current block to be encoded. The bottom right sample may also be generated by various other methods besides the two methods described above.

After generating the bottom right sample, bottom samples (bottom buffer) and right samples (right buffer) are generated using the bottom left sample and the top right sample. The bottom samples are generated by linearly interpolating the bottom left sample and the bottom right sample, and the right samples are generated by linearly interpolating the top right sample and the bottom right sample. In this case, the methods of generating the bottom samples using the bottom left sample and the bottom right sample and generating the right samples using the top right sample and the bottom right sample may vary depending on a weight assigned.

After generating the bottom samples and the right samples, linear interpolation prediction is performed using the generated bottom samples and right samples. A method of generating a current prediction sample C using a linear interpolation intra prediction method is as follows. In the following method, a prediction mode of a vertical type having a positive directionality is described as an example.

1) Copy left reference samples to the bottom sample buffer and generate the bottom buffer using the generated bottom samples.
2) Interpolate A reference sample and B reference sample of a top reference buffer using reconstructed values to generate a prediction sample value P (using a conventional prediction sample generation method of intra encoding).
3) Interpolate A' reference sample and B' reference sample of a newly generated bottom reference buffer to generate a prediction sample value P' (using a conventional prediction sample generation method of intra encoding).
4) Generate a final prediction value C by linearly interpolating the generated P and P'.

For all samples in the current block to be encoded, the above-described steps 2) to 4) are applied to generate prediction values. The linear interpolation intra prediction method may be applied to all directional modes except the planar mode and DC mode where no directionality exists.

### (2) Multi-reference line (MRL) Intra Prediction

Conventional intra prediction used only neighboring samples of the first top line and the first left line of a current block as reference samples for intra prediction. However, in the multiple-reference line (MRL) method, intra prediction may be performed by using neighboring samples located on sample lines that are one to three sample distances apart from the top and/or left of the current block as reference samples. A multiple reference line index (i.e., mrl_idx) indicates which line is used for intra prediction for the current block and may be signaled through coding unit syntax.

MRL may be disabled for blocks in the first line (row) of a CTU. This is to prevent extended reference lines outside the current CTU line from being used. In addition, when the above-described additional reference line is used, the above-described PDPC may be disabled.

Meanwhile, in VVC, the MRL list may be extended to include more reference lines for intra prediction. In this case, the extended reference line list may consist of line indices such as {1, 3, 5, 7, 12}. For template-based intra mode derivation (TIMD), only the first two reference line candidates, such as {1, 3}, may be used instead of the full MRL candidate list.

**(3) Intra Sub-Partitions (ISP) Prediction**

Conventional intra prediction regarded a block to be encoded as a single encoding unit and performed encoding without partitioning. However, in the Intra Sub-Partitions (ISP) prediction method, the block to be encoded may be partitioned in the horizontal or vertical direction, then the intra prediction encoding may be performed. In this case, encoding/decoding may be performed on a partitioned block basis to generate a reconstructed block, and the reconstructed block may be used as a reference block for the next partitioned block. The current Intra Sub-Partitions (ISP) are partitioned according to block size as shown in Table 3.

[Table 3]

| Block Size (CU) | Number of Partitions |
|---|---|
| 4x4 | not available |
| 4x8, 8x4 | 2 |
| In all other cases | 4 |

The ISP tool vertically or horizontally may partition luma intra-predicted blocks into two or four sub-partitions depending on the block size. When the block size is greater than $4\times8$ (or $8\times4$), the block may be partitioned into four subpartitions. It is known that $M\times128$ ($M\leq64$) and $128\times N$ ($N\leq64$) ISP block may cause potential issues in a $64\times64$ VDPU. For example, an $M\times128$ CU in a single-tree case may have an $M\times128$ luma TB and two corresponding $M/2\times64$ chroma TBs. When the CU uses ISP, the luma TB may be partitioned into four $M\times32$ TBs (only horizontal partitioning may be allowed), each of which may be less than a $64\times64$ block. However, in the current design, ISP chroma blocks may not be partitioned. Therefore, the chroma components may have a size greater than a $32\times32$ block. Similarly, a $128\times N$ CU using ISP may result in a similar situation. Therefore, for these two cases, the 64x64 decoder pipeline becomes an issue. For this reason, the CU size available for ISP may be limited to a maximum of $64\times64$.

In order to reduce encoding complexity, the intra subpartition method may generate an MPM list according to each partitioning method (horizontal partitioning and vertical partitioning), and may generate the optimal mode by comparing suitable prediction mode among the prediction mode in the generated MPM list from a rate distortion optimization (RDO) perspective. In addition, when multiple reference line (MRL) intra prediction is used, the above-described intra subpartition method may not be applied. In other words, the intra sub-partition method may be applied only when the reference line 0 is used (i.e., when the value of intra_luma_ref_idx is 0). Additionally, when the above-described intra sub-partition method is used, the above-described PDPC may not be used.

In the intra sub-partition method, whether the intra sub-partition is applied may be first signaled on a block basis, and when the current block uses intra sub-partitions (intra_subpartitions_mode_flag), information indicating whether the partitioning is horizontal or vertical (intra_subpartitions_split_flag) may be then encoded/decoded.

When the intra sub-partition method is applied, the intra prediction mode for the current block is applied identically to the sub-partitions, and neighboring reference sample may be derived and used on a sub-partition basis, thereby intra prediction performance may be improved. In other words, when the intra sub-partition method is applied, a residual sample processing procedure may be performed on a sub-partition basis. In other words, intra prediction samples may be derived for each sub-partition, and residual signal (residual samples) for the corresponding sub-partition may be added to generate reconstructed samples. The residual signal (residual samples) may be derived through a dequantization/inverse transform procedure based on residual information (quantized transform coefficient information or residual coding syntax) in the above-described bitstream. In other words, prediction samples derivation and residual samples derivation may be performed for a first sub-partition, and based on this, reconstructed samples for the first sub-partition may be generated. In this case, when deriving prediction samples for a second sub-partition, some of the reconstructed samples in the first sub-partition (i.e., left or top neighboring reference samples of the second subpartition) may be used as neighboring reference samples for the second sub-partition. Similarly, prediction samples derivation and residual samples derivation may be performed for the second sub-partition, and based on this, reconstructed samples for the second sub-partition may be generated. In this case, when deriving prediction samples for a third sub-partition, some of the reconstructed samples in the second sub-partition (i.e., left or top neighboring reference samples of the third subpartition) may be used as neighboring reference samples for the third sub-partition. The same applies to the subsequent subpartitions.

**(4) Matrix-based Intra Prediction (MIP)**

Matrix-based intra prediction (MIP) may be referred to as affine linear weighted intra prediction (ALWIP) or matrix weighted intra prediction (MIP or MWIP). To predict samples of a rectangular block having a width W and a height H, a line including H reconstructed neighboring boundary samples adjacent to the left of the current block and a line including W reconstructed neighboring boundary samples adjacent to the top of the current block may be used as input. Unavailable reconstructed neighboring boundary sample may be replaced with available sample according to a method performed in conventional intra prediction. The process of generating a prediction signal by applying MIP may include the following three steps.

Step 1. Averaging process: By performing averaging using neighboring boundary samples, four sample values (in the case of W=H=4) or eight sample values (in other cases) may be derived.

Step 2. Matrix vector multiplication process: A matrix-vector multiplication is performed using the averaged sample values as input, and an offset is added to generate a reduced prediction signal for a subsampled set of samples in the original block.

Step 3. (Linear) Interpolation process: A prediction signal at the remaining position may be generated by linearly interpolating the prediction signal for the subsampled set. The linear interpolation may be a single-step interpolation in each direction.

The matrix and offset required to generate the prediction signal (i.e., the predicted block or predicted samples) may be obtained from three matrix sets: $S_0$, $S_1$, and $S_2$. The set $S_0$ may include 18 matrices and 18 offset vectors. In this case, each matrix may consist of 16 rows and 4 columns, and each offset vector may have a size of 16. The matrix and offset vector of the set $S_0$ may be used for a block of size $4 \times 4$.

The set $S_1$ may include 10 matrices and 10 offset vectors. In this case, each matrix may consist of 16 rows and 8 columns, and each offset vector may have a size of 16. The matrix and offset vector of set $S_1$ may be used for a block of size $4 \times 8$, $8 \times 4$, and $8 \times 8$.

The set $S_2$ may include 6 matrices and 6 offset vectors. In this case, each matrix may consist of 64 rows and 8 columns, and each offset vector may have a size of 64. The matrix and offset vector of set $S_2$ may be used for all other shapes of a block.

The total number of multiplications required for a matrix-vector multiplication operation may always be less than or equal to $4 \times W \times H$. In other words, up to four multiplications per sample may be required for the MIP mode.

**(5) Decoder side intra mode derivation (DIMD)**

In DIMD, intra prediction may be derived as a weighted average of a planar and two derived directions. To achieve this, two angular modes may be selected from a Histogram of Gradient (HoG) calculated from neighboring pixels of the current block. When the two modes are selected, their predictors and the planar predictor may be normally calculated, and the corresponding weighted average may be used as the final predictor for the current block. In this case, to determine the weight, the corresponding amplitude in the HoG may be used for each of the two modes.

Since the derived intra modes are included in the primary list of an intra MPM, the DIMD process may be performed before the MPM list is configured. The primary derived intra mode of a DIMD block may be stored together with the block and may be used for configuring MPM list of neighboring blocks.

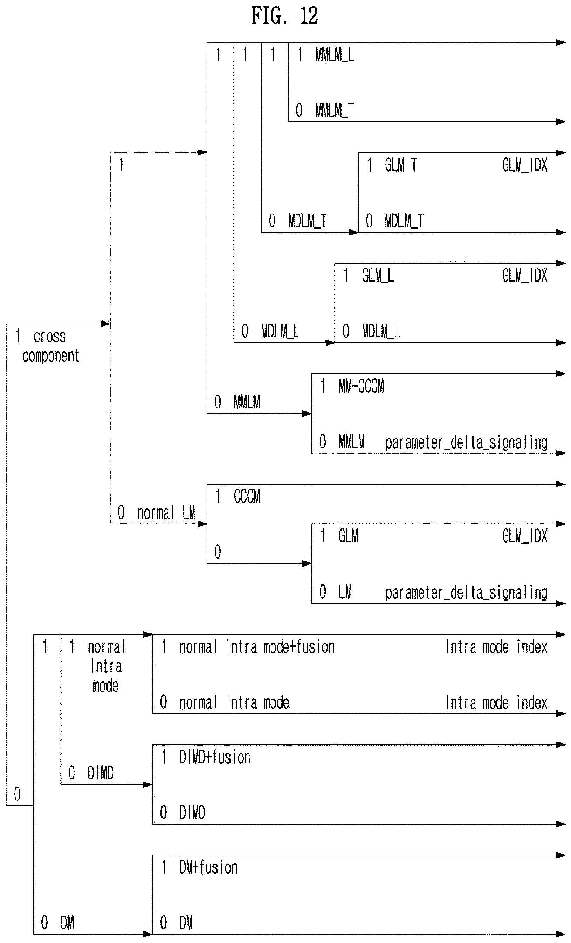

In the DIMD chroma mode, the DIMD derivation method may be used to derive a chroma intra prediction mode of the current block based on pre-reconstructed neighboring Y, Cb, and Cr samples in the second neighboring row and column as shown in FIG. 12. Specifically, in order to build the HoG, horizontal gradient and vertical gradient may be calculated not only for the pre-reconstructed Cb and Cr samples but also for each collocated pre-reconstructed luma sample of the current chroma block. Then, chroma intra prediction for the current chroma block may be performed using the intra prediction mode with the highest histogram amplitude.

When the intra prediction mode derived from the DIMD chroma mode is the same as the intra prediction mode derived from the DM mode, the intra prediction mode with the secondhighest histogram amplitude may be used as the DIMD chroma mode. To indicate whether the above-described DIMD chroma mode is applied, a predetermined CU-level flag may be signaled.

**(6) Fusion for template-based intra mode derivation (TIMD)**

For each intra prediction mode in the MPM, the SATD between the prediction sample of a template and the reconstructed sample may be calculated. Then, the first two intra prediction modes with the smallest SATD may be selected as TIMD modes. These two TIMD modes may be fused according to a weight, and such weighted intra prediction may be used for coding the current CU. The derivation of the TIMD mode may include the above-described Position Dependent Intra Prediction Combination (PDPC).

The cost of the two selected modes may be compared with a predetermined threshold, and a cost factor 2 may be applied as shown in Equation 1 below.

[Equation 1]

$$costMode2 < 2*costMode1$$

When the condition of Equation 1 is true, the above-described fusion may be applied. In contrast, when the condition of Equation 1 is false, only mode 1 may be used.

Meanwhile, the weight of the modes may be calculated from their respective SATD costs as shown in Equation 2 below.

[Equation 2]

$$weight1 = costMode2/(costMode1 + costMode2)$$

$$weight2 = 1 - weight1$$

**Derivation of prediction samples for chroma component**

When intra prediction is performed on the current block, prediction for a luma component block (luma block) and prediction for a chroma component block (chroma block) of the current block may be performed, and in this case, the intra prediction mode for the chroma component (chroma block) may be independently set from the intra prediction mode for the luma component (luma block).

For example, an intra prediction mode for a chroma component may be indicated based on intra chroma prediction mode information, and the intra chroma prediction mode information may be signaled in the form of a syntax element intra_chroma_pred_mode. As an example, the intra chroma prediction mode information may indicate one of a candidate mode among candidate modes including at least one of a Planar mode, a DC mode, a vertical mode, a horizontal mode, a Derived Mode (DM) , an L_CCLM, a T_CCLM, or an LT_CCLM mode. The DM may also be referred to as a direct mode, and CCLM may also be referred to as LM.

Meanwhile, DM and CCLM are dependent intra prediction modes that predict a chroma block using information of a luma block. The DM may represent a mode in which the same intra prediction mode as the intra prediction mode applied to the luma component is applied to the intra prediction mode for the chroma component. In addition, the CCLM may represent an intra prediction mode in which, during the process of generating a prediction block for the chroma block, reconstructed samples of the luma block are subsampled, and samples derived by applying CCLM parameters $\alpha$ and $\beta$ to the subsampled samples are used as prediction samples for the chroma block.

**(1) Multiple Direct Modes (MDM) for chroma intra coding**

Multiple Direct Modes (MDM) may be applied to the current chroma block.

MDM may extend and use the conventional single mode, a DM mode, to multiple modes. In other words, when configuring intra prediction mode for a chroma image, multiple DM modes may be selected as follows.

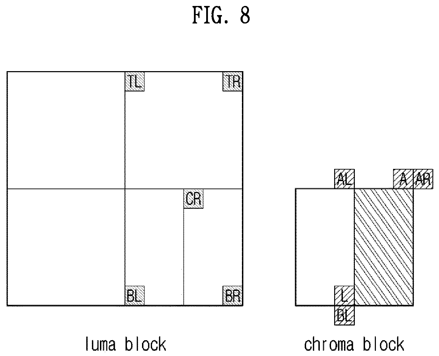

- Intra prediction mode at CR, TL, TR, BL, and BR positions of the co-located luma block (referring to FIG. 8)
- Intra prediction mode of neighboring block of the current chroma block, such as L, A, BL, AR, and AL block
- PLANAR and DC mode
- Angular mode with an angular offset of -1 or +1 from previously selected angular mode
- Vertical mode, Horizontal mode, Mode 2, 34, 66, 10, 26 (in the case of 65 directional modes)
- When five prediction modes are not selected, the previously selected mode may be duplicated and then selected.

**(2) Cross-component linear model (CCLM)**

The CCLM mode may be applied to the current chroma block. The CCLM mode is an intra prediction mode that uses the correlation between a luma block and a chroma block corresponding to the luma block, in which a linear model may be derived based on neighboring samples of the luma block and neighboring samples of the chroma block, and the CCLM mode may indicate a mode that a prediction sample of the chroma block being derived based on the linear model and the reconstructed samples of the luma block. Specifically, when the CCLM mode is applied to the current chroma block, parameters for the linear model may be derived based on neighboring samples used for intra prediction of the current chroma block and neighboring samples used for intra prediction of the current luma block.

To reduce redundancy in cross-component, the present disclosure may use a CCLM prediction mode. Here, a chroma sample may be predicted based on reconstructed luma samples of the same CU using a linear model. For example, the linear model may be as shown in Equation 3 below.

[Equation 3]

$$pred_C(i,j) = \alpha \cdot rec_L{}'(i,j) + \beta$$

Here, $pred_c(i,j)$ may represent a prediction sample at the (i, j) coordinate of the current chroma block within the current CU, and $rec_L{}'(i,j)$ may represent a reconstructed sample at the (i, j) coordinate of the current luma block within the CU. Alternatively, $rec_L{}'(i,j)$ may represent a down-sampled reconstructed sample of the current luma block.

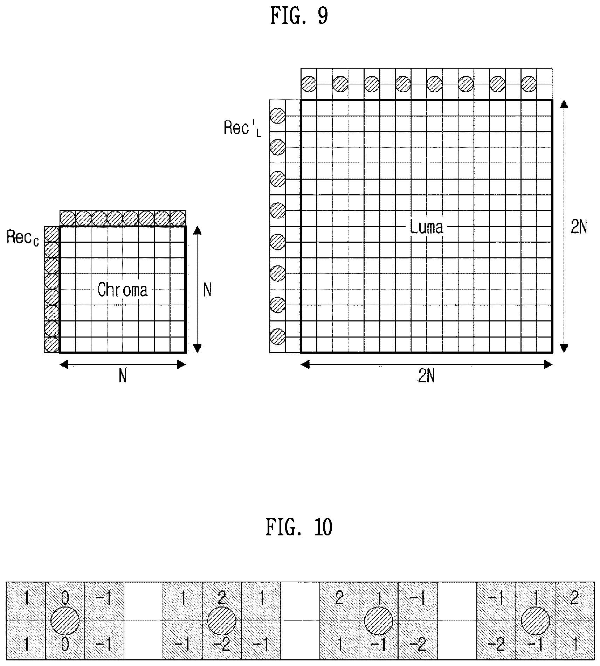

FIG. 9 shows a diagram illustrating the positions of neighboring samples used for deriving a CCLM parameter. FIG. 9 illustrates examples of the positions of left neighboring samples, top neighboring samples, and samples adjacent to the current block related to the CCLM mode.

CCLM parameters (i.e., $\alpha$ and/or $\beta$) may be derived using up to four adjacent chroma samples and corresponding down-sampled luma samples. Alternatively, the CCLM parameters may be derived using N neighboring chroma samples and their corresponding down-sampled luma samples. When the size of the current chroma block is W×H, W' and H' may be set as follows. W' may represent a range where top neighboring chroma samples used for deriving the CCLM parameter are located. H' may represent a range where left neighboring chroma samples used for deriving the CCLM parameter are located.

- When the LM mode is applied, W' = W and H' = H
- When the LM_A mode is applied, W' = W + H
- When the LM_L mode is applied, H' = H + W

The positions of top neighboring samples may be represented as S[0, -1] to S[W'-1, -1], and the positions of left neighboring samples may be represented as S[-1, 0] to S[-1, H'-1]. In this case, four samples may be selected as follows.

- When the LM mode is applied and both top and left neighboring samples are available: S[W'/4, -1], S[3W'/4, -1], S[-1, H'/4], S[-1, 3H'/4]
- When the LM_A mode is applied or only top neighboring samples are available: S[W'/8, -1], S[3W'/8, -1], S[5W'/8, -1], S[7W'/8, -1]
- When the LM_L mode is applied or only left neighboring samples are available: S[-1, H'/8], S[-1, 3H'/8], S[-1, 5H'/8], S[-1, 7H'/8]

The four neighboring luma samples located at the positions selected as above-described method may be obtained through down sampling. Four comparisons may be performed to find two smaller values ($x^0_A$ and $x^1_A$) and two larger values ($x^0_B$ and $x^1_B$) among the four luma samples. The chroma sample values corresponding to the four neighboring samples may be denoted as $y^0_A$, $y^1_A$, $y^0_B$, and $y^1_B$. In this case, $X_a$, $X_b$, $Y_a$, and $Y_b$ may be derived using Equation 4 below.

[Equation 4]

$$X_a=(x^0_A + x^1_A +1)>>1;\ X_b=(x^0_B + x^1_B +1)>>1;\ Y_a=(y^0_A + y^1_A +1)>>1;\ Y_b=(y^0_B + y^1_B +1)>>1$$

The CCLM parameters $\alpha$ and $\beta$ may be obtained using Equation 5 below.

[Equation 5]

$$\alpha = \frac{Y_a - Y_b}{X_a - X_b}$$

$$\beta = Y_b - \alpha \cdot X_b$$

The top template and the left template in FIG. 9 described above may be used together to calculate the linear model coefficient. In addition, the templates may alternatively be used in the two other LM modes (LM_A mode and LM_L mode). Specifically, in the LM_A mode, only the top template may be used to calculate the linear model coefficients. In this case, to obtain more samples, the top template may be extended up to samples at W+H position. On the other hand, in the LM_L mode, only the left template may be used to calculate the linear model coefficients. In this case, to obtain more samples, the left template may be extended up to samples at H+W position. In the case of a non-square block, the top template may be extended up to W+W position, and the left template may be extended up to H+H position.

Meanwhile, a total of eight intra prediction modes may be available for chroma intra mode coding. The modes may include five conventional intra prediction modes and three CCLM modes (CCLM, LM_A, and LM_L). The chroma mode signaling and derivation process will be described later with reference to Table 4 and Table 5.

Chroma mode coding may be directly dependent on the intra prediction mode of the corresponding luma block. In an I slice, a separate block partitioning structure is enabled for luma and chroma components, so one chroma block may correspond to multiple luma blocks. Accordingly, in the case of the chroma DM mode, the intra prediction mode of the corresponding luma block covering the center position of the current chroma block may be directly applied.

[Table 4]

| intra_chroma_pred_mode[ xCb ][ yCb ] | lumaIntraPredMode | | | | |
|---|---|---|---|---|---|
| | 0 | 50 | 18 | 1 | X(0 <= X <= 66) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 0 | 50 | 18 | 1 | x |

[Table 5]

| intra_chroma_pred_mode[ xCb ][ yCb ] | lumaIntraPredMode | | | | |
|---|---|---|---|---|---|
| | 0 | 50 | 18 | 1 | X (0 <= X <= 66) |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | 81 | 81 | 81 | 81 | 81 |
| 5 | 82 | 82 | 82 | 82 | 82 |
| 6 | 83 | 83 | 83 | 83 | 83 |
| 7 | 0 | 50 | 18 | 1 | X |

Table 4 shows a matching table for deriving an intra chroma prediction mode when CCLM is not applicable, and Table 5 shows a mapping table for deriving an intra chroma prediction mode when CCLM is applicable. As shown in the tables, the intra chroma prediction mode may be determined based on the intra luma prediction mode of a luma block covering the center bottom-right sample of the current block or the chroma block (i.e., when DUAL_TREE is applied) and the value of the signaled intra chroma prediction mode (intra_chroma_pred_mode) information. The indices of Intra-PredModeC[xCb][yCb] derived from the tables may correspond to the indices of intra prediction mode presented in Table 1 described above.

### (3) Multi-model LM (MMLM)

The CCLM mode may be extended to an MMLM mode. For example, three MMLM modes may be additionally included. In each MMLM mode, reconstructed neighboring samples may be classified into two groups using a threshold. The threshold may be, for example, the average value of the reconstructed luma samples. A linear model for each group may be derived using a Linear-Mean-Square (LMS) method. The LMS method may also be used in the case of the CCLM mode to derive a linear model.

When MMLM is used, more than or equal to two linear models may exist between luma samples and chroma samples within a CU. In this method, neighboring luma samples and neighboring chroma samples of the current block may be classified into several groups. Additionally, each group may be used as a training set for deriving a linear model. In other words, a CCLM parameter (i.e., $\alpha$ and/or $\beta$) may be derived for each group. In addition, samples within the current luma block may be classified using the same method as that used for classifying the neighboring luma samples.

In this method, neighboring samples may be classified into M groups. Here, M may be 2 or 3. When M is 2 or 3, the MMLM method may be designed as two additional chroma prediction modes, referred to as MMLM2 and MMLM3, in addition to the original LM mode. An image encoding apparatus may select an optimal mode through an RDO process and may signal the selected mode.

The threshold may be calculated as the average value of the reconstructed neighboring luma samples. For example, a neighboring luma sample having $Rec'_L[x, y]$ less than or equal to the threshold may be classified into Group 1, and a neighboring luma sample having $Rec'_L[x, y]$ greater than the threshold may be classified into Group 2. Two models for Group 1 and Group 2 may be derived using Equation 6 below.

[Equation 6]

$$\begin{cases} Pred_C[x, y] = \alpha_1 \times Rec'_L[x, y] + \beta_1 & if \ Rec'_L[x, y] \leq Threshold \\ Pred_C[x, y] = \alpha_2 \times Rec'_L[x, y] + \beta_2 & if \ Rec'_L[x, y] > Threshold \end{cases}$$

### (4) Fusion of chroma intra prediction modes

The DM mode and four default modes may be fused into the MMLM_LT mode as shown in Equation 7 below.

[Equation 7]

$$pred = (w0 * pred0 + w1 * pred1 + (1 \ll (shift - 1))) \gg shift$$

Here, pred0 may be a predictor obtained by applying a non-LM mode, pred1 may be a predictor obtained by applying the MMLM_LT mode, and pred may be the final predictor of the current chroma block. Two weights, w0 and w1, may be determined based on the intra prediction mode of adjacent chroma blocks, and shift may be set to 2. Specifically, when both top and left neighboring blocks are coded in LM modes, {w0, w1} may be {1, 3}. Additionally, when both top and left neighboring blocks are coded in non-LM modes, {w0, w1} may be {3, 1}. In other cases, {w0, w1} may be {2, 2}. In syntax design, when a non-LM mode is selected, a flag may be signaled to indicate whether the fusion is applied. This method is applied only to I slices.

### (5) Convolutional cross-component model (CCCM)

Similar to the current CCLM mode, a Convolutional Cross-Component Model (CCCM) has been introduced to predict chroma samples from pre-reconstructed luma samples. As with CCLM, the pre-reconstructed luma samples may be down-sampled to match the lower-resolution chroma grid when chroma sub-sampling is used.

Additionally, similar to CCLM, there exists an option to use either a single-model or a multi-model variant of CCCM. The multi-model variant may use two models. One model may be a model derived for samples above the average luma reference value, and the other model may be a model for the remaining samples. The multi-model CCCM mode may be selected for PUs that have at least 128 available reference samples.

**(6) gradient linear model (GLM)**

Compared to CCLM, GLM may derive a linear model by using a luma sample gradient instead of a down-sampled luma value. Specifically, when GLM is applied, the input to the CCLM process, in other words, the down-sampled luma sample L, may be replaced with the luma sample gradient G as shown in Equation 8. Other parts of CCLM (e.g., parameter derivation and linear transform of prediction sample) may remain unchanged.

[Equation 8]

$$C = \alpha \cdot G + \beta$$

When the CCLM mode is enabled for the current CU, two flags may be separately signaled for the Cb and Cr components to indicate whether GLM is enabled for each component. When GLM is enabled for one component, an additional syntax element may be signaled to select one of 16 gradient filters for gradient calculation. GLM may be combined with the conventional CCLM by signaling one extra flag in the bitstream. When this combination is applied, the filter coefficients used to derive the input luma samples for the linear model may be calculated as a combination of the selected gradient filter of GLM and the down-sampling filter of CCLM.

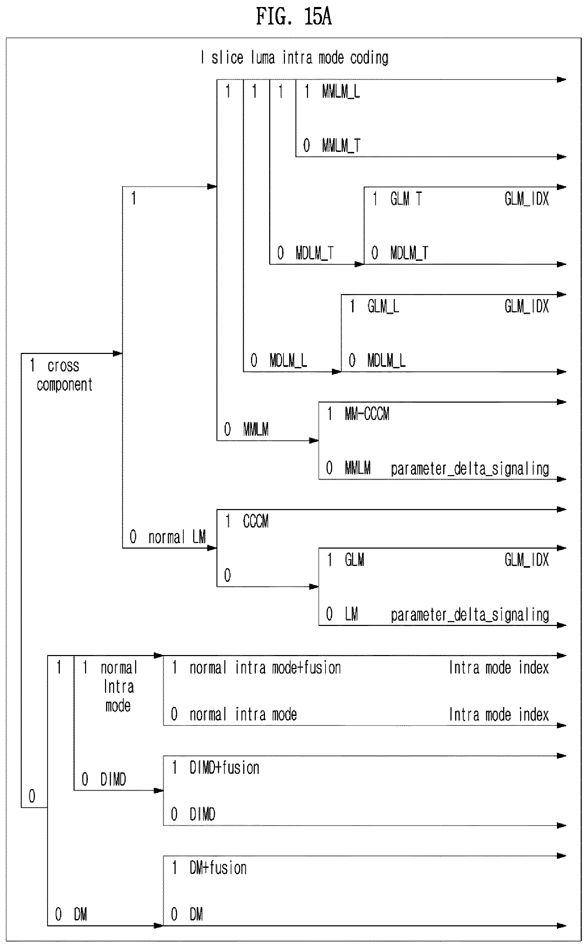

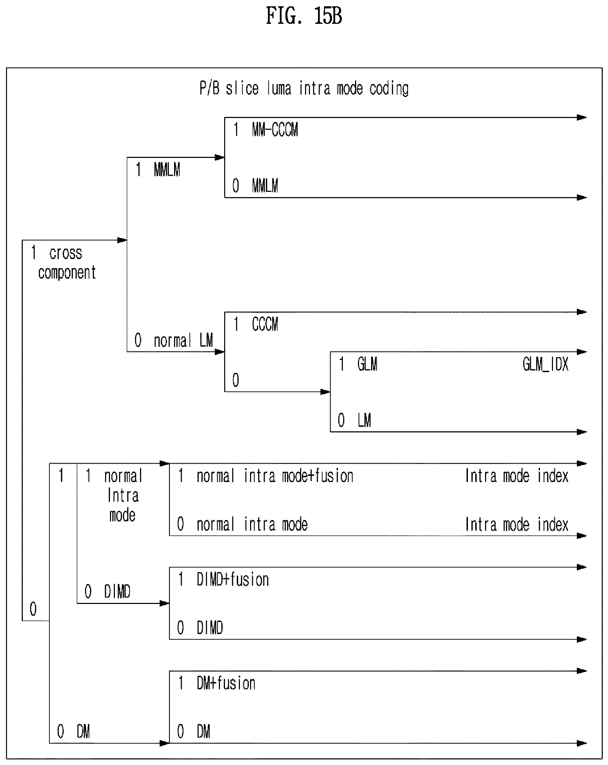

FIG. 15 shows examples of four Sobel-based gradient patterns for GLM. As shown in FIG. 15, only four out of sixteen gradient filters may be activated in GLM. Meanwhile, a combination of the conventional CCLM down-sampling filter and gradient filters may be deactivated.

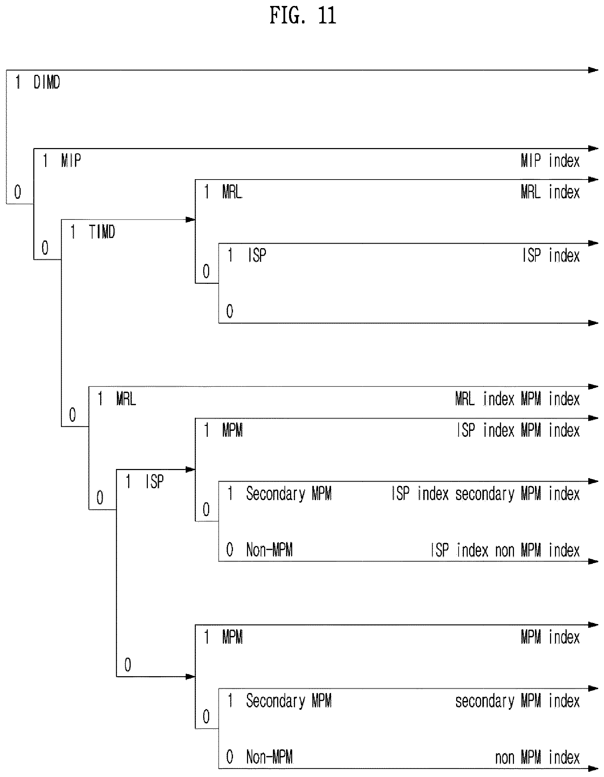

The coding structure of the above-described intra prediction modes may be as shown in FIG. 11 and FIG. 12.

Referring first to FIG. 11, a luma intra prediction mode (or information on the luma intra prediction mode) may be hierarchically encoded/signaled in the order of 'DIMD → MIP → TIMD → MRL → ISP → MPM → Secondary MPM / non-MPM'. In FIG. 11, the MIP index may indicate the MIP mode and may require 3 to 5 additional bits to be transmitted. Additionally, the MRL index may indicate an MRL reference line and may require 1 to 4 additional bits to be transmitted. Additionally, the ISP index may indicate an ISP direction and may require 1 additional bit to be transmitted. Additionally, the MPM index may indicate one candidate in the MPM list and may require 1 to 5 additional bits to be transmitted. Additionally, the secondary MPM index may indicate one candidate in the secondary MPM list and may require 4 additional bits to be transmitted. Additionally, the non-MPM index may indicate an intra mode not included in the MPM list and may require 5 to 6 additional bits to be transmitted.

Next, referring to FIG. 12, a chroma intra prediction mode (i.e., information on the chroma intra prediction mode) may be hierarchically encoded/signaled based on whether a cross component scheme is applied. In FIG. 12, MMLM, MMLM_L, and MMLM_T relate to the above-described Multi-model LM, where MMLM uses the same reference sample area as LM, and MMLM_L and MMLM_T use the same reference sample area as LM_L and LM_T, respectively. Additionally, MDLM_L and MDLM_T relate to the above-described LM_L and LM_A, respectively. Additionally, GLM, GLM_L, and GLM_T relate to the above-described gradient linear model, where GLM uses the same reference sample area as LM, and GLM_L and GLM_T use the same reference sample area as LM_L and LM_T, respectively. Additionally, CCCM and MM-CCCM relate to the above-described Convolutional cross-component model, where MM-CCCM, like MMLM, uses two sets of CCCM parameters. Additionally, fusion refers to combining different chroma intra prediction modes by combining a predictor generated by a normal chroma intra mode, DM, or DIMD with a predictor from MMLM or CCCM.

GLM_IDX may indicate a filter to apply GLM and may require 3 to 5 additional bits to be transmitted. In addition, parameter_delta_signaling may be encoded/signaled in the above-described MMLM and LM modes and may be used to adjust the slope of the linear model. Additionally, Intra mode index may indicate a normal intra mode and may require 2 additional bits to be transmitted.

As shown in FIG. 11 and FIG. 12, the conventional intra prediction mode coding structure may have a very complex hierarchical structure, which may require a large number of bits to indicate intra prediction mode information, thereby increasing signaling overhead. For example, according to the coding structure in FIG. 11, when coding an MRL mode to which TIMD is applied, 4 bits such as '0011' may be required along with 1 to 4 additional bits for the MRL index. In addition, according to the coding structure in FIG. 12, when coding a CCCM mode, 3 bits such as '101' may be required. Therefore, to prevent an increase in signaling overhead or degradation in coding efficiency, it may be necessary to optimize the conventional coding structure.

In addition, as numerous intra coding tools are newly being introduced, the amount of transmission volume of mode coding information required to control these tools is also significantly increasing, and thus, it may be necessary to optimize the conventional coding structure.

Accordingly, the present disclosure proposes an optimized intra prediction mode coding structure that considers mode selection probability or mode attribute by slice type. Various embodiments described in the present disclosure may be applied individually or in combination of two or more. Hereinafter, embodiments of the present disclosure will be described in detail with reference to the attached drawing.

## Embodiment 1

According to the conventional coding structure described above with reference to FIG. 11, the luma intra prediction mode is hierarchically encoded/signaled in the order of 'DIMD → MIP → TIMD → MPM → Secondary MPM / non-MPM (with MRL and ISP omitted). However, as shown in the experimental results of Table 6, the selection probability of luma intra prediction mode may exhibit a tendency different from the above coding order.

[Table 6]

| | All Intra Main 10 | | | | | |
| --- | --- | --- | --- | --- | --- | --- |
| | Over ECM-4.0 | | | | | |
| | MIP | DIMD | TIMD | MPM | Secondary-MPM | Non-MPM |
| Class A1 | 20.93 | 13.31 | 22.43 | 33.54 | 6.09 | 3.71 |
| Class A2 | 15.44 | 10.30 | 28.62 | 36.76 | 5.66 | 3.22 |
| Class B | 13.40 | 10.13 | 29.71 | 37.36 | 5.61 | 3.79 |
| Class C | 11.45 | 11.88 | 29.70 | 34.01 | 7.54 | 5.43 |
| Class E | 10.61 | 9.16 | 34.35 | 33.31 | 7.98 | 4.58 |
| Overall | 14.36 | 10.96 | 28.96 | 35.00 | 6.58 | 4.15 |
| Class D | 12.23 | 13.61 | 26.19 | 30.21 | 9.77 | 7.99 |
| Class F | 7.19 | 7.62 | 21.32 | 29.10 | 6.23 | 5.51 |

Specifically, referring to Table 6, the selection probability of luma intra prediction mode follows the descending order of 'MPM → TIMD → MIP → DIMD → Secondary MPM → non-MPM' . When luma intra prediction mode with relatively high selection probabilities is coded first, the number of bits may be reduced and signaling overhead may be decreased.

Accordingly, in Embodiment 1 of the present disclosure, a new coding order reflecting the selection probability order of luma intra prediction mode is proposed. The detailed content is as follows.

In an embodiment, the luma intra prediction mode may be encoded/signaled in the order of 'TIMD → MIP → DIMD → MPM → Secondary MPM / non-MPM'.

In another embodiment, the luma intra mode information may be encoded/signaled in the order of 'DIMD → TIMD → MIP → MPM → Secondary MPM / non-MPM'.

In another embodiment, the luma intra mode information may be encoded/signaled in the order of 'MPM → TIMD → MIP → DIMD → Secondary MPM / non-MPM'.

In Embodiment 1 of the present disclosure, selection of TIMD, MIP, DIMD, MRL, ISP, MPM, and Secondary MPM mode may be performed based on an individual flag indicating whether each mode is used. The individual flag may be, for example, a TIMD flag, MIP flag, DIMD flag, MRL flag, ISP flag, MPM flag, or Secondary MPM flag, and when the value of a given flag is 1, it may indicate that the mode associated with the flag is selected. In addition, the order of branches for each luma intra coding mode may match the parsing order of the flag indicating the corresponding mode.

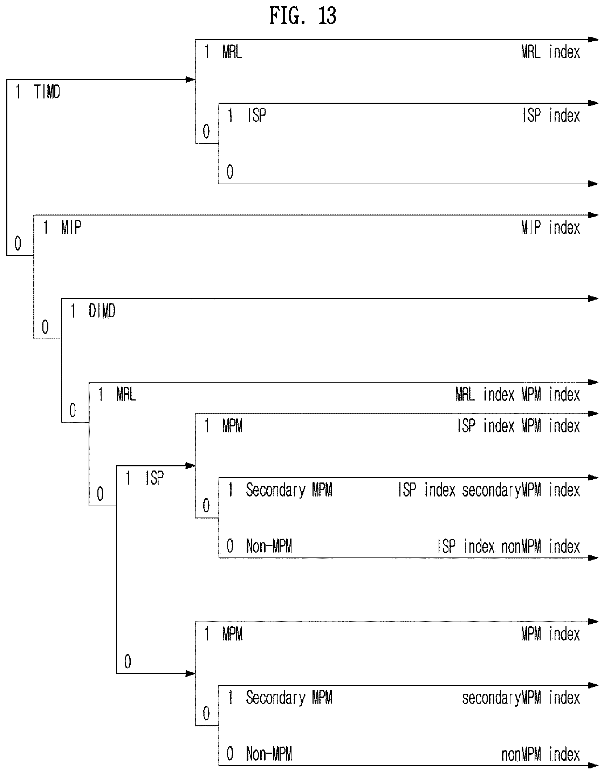

An example of the luma intra prediction mode coding structure according to Embodiment 1 of the present disclosure is shown in FIG. 13.

Referring to FIG. 13, the luma intra prediction mode may be encoded/signaled in the order of 'TIMD → MIP → DIMD → MPM → Secondary MPM / non-MPM'.

Specifically, whether TIMD is applied (e.g., TIMD flag) may be determined first. In other words, TIMD may be positioned at the topmost level of the luma intra prediction mode coding structure.

When it is determined that TIMD is applied (e.g., TIMD flag = 1), whether MRL is applied (e.g., MRL flag) may be determined, and when MRL is not applied (e.g., MRL flag = 0), whether ISP is applied (e.g., ISP flag) may be further determined.

In contrast, when TIMD is not applied (e.g., TIMD flag = 0), whether MIP is applied (e.g., MIP flag) may be determined, and when MIP is not applied (e.g., MIP flag = 0), whether DIMD is applied (e.g., DIMD flag) may be further determined. Additionally, when it is determined that DIMD is not applied (e.g., DIMD flag = 0), whether MRL is applied (e.g., MRL flag) may be determined, and when MRL is not applied (e.g., MRL flag = 0), whether ISP is applied (e.g., ISP flag) may be further determined. Additionally, when it is determined that ISP is not applied (e.g., ISP flag = 0), whether MPM is applied (e.g., MPM flag) may be determined, and when MPM is not applied (e.g., MPM flag = 0), whether Secondary MPM is applied (e.g., Secondary MPM flag) may be further determined.

Depending on the embodiment, the order of TIMD, MIP, DIMD, and MPM may be rearranged to match the structure shown in FIG. 13. In this case, the parsing order of the flag indicating each mode may also be rearranged according to the branch order of the corresponding modes.

As described above, according to Embodiment 1 of the present disclosure, the luma intra prediction mode may be hierarchically encoded/signaled in a predetermined order based on the selection probability of each mode. Accordingly, the coding structure may be further optimized, so that the number of bits may be reduced and signaling overhead may be decreased.

## Embodiment 2

In general, compared to I-type (intra) slice, inter-coded block may be prioritized (or dominant) in P/B-type (inter) slice, and thus, P/B-type (inter) slice may be characterized by having fewer intra-coded blocks than inter-coded blocks. However, the conventional coding structure of luma intra prediction mode described above with reference to FIG. 11 may not consider such slice type-specific attribute.

Accordingly, in Embodiment 2 of the present disclosure, a new coding structure is proposed in which luma intra prediction mode is adaptively encoded/signaled based on the slice type. The detailed content is as follows.

### (1) Number of MIP modes

The number of MIP modes may vary depending on the slice type of the current slice.

In an embodiment, in the case of an I-type slice, the number of MIP modes may be 32/16/12 depending on the block size type. Here, a specific example of the block size type is as described above with reference to Table 2. In contrast, in the case of a P/B-type slice, the number of MIP modes may be 16/8/8 depending on the block size type.

In another embodiment, in the case of an I-type slice, the number of MIP modes may be 32/16/12 depending on the block size type. In contrast, in the case of a P/B-type slice, the number of MIP modes may be 8/4/2 depending on the block size type.

In another embodiment, in the case of an I-type slice, the number of MIP modes may be 32/16/12 depending on the block size type. In contrast, in the case of a P/B-type slice, the number of MIP modes may be 0/0/0 depending on the block size type.

Meanwhile, Embodiment 2 of the present disclosure is not limited to the above examples. For example, the number of MIP modes may be separately defined for a P-type slice and a B-type slice. In addition, the number of MIP modes per slice type may be predefined at the decoder side or the number of MIP modes per slice type may be signaled through high level syntax (HLS).

### (2) Number of MRL reference sample lines

The number of MRL reference sample lines (or the number of MRL indices) may vary depending on the slice type of the current slice.

In an embodiment, in the case of an I-type slice, the number of MRL indices may be 5. In contrast, in the case of a P/B-type slice, the number of MRL indices may be 3.

In another embodiment, in the case of an I-type slice, the number of MRL indices may be 5. In contrast, in the case of a P/B-type slice, the number of MRL indices may be 1.

In another embodiment, in the case of an I-type slice, the number of MRL indices may be 5. In contrast, in the case of a P/B-type slice, the number of MRL indices may be 0.

Meanwhile, Embodiment 2 of the present disclosure is not limited to the above examples. For example, the number of MRL indices may be separately defined for a P-type slice and a B-type slice. In addition, the MRL index may be selected from among five reference sample indices {1, 3, 5, 7, 12}, or may be selected from new indices (or reference sample lines) other than the five indices described above.

### (3) Selective Mode Coding

A luma intra prediction mode may be selectively encoded/signaled based on the slice type of the current slice.

In an embodiment, in the case of an I-type slice, DIMD, TIMD, MRL, MIP, and ISP may be used, and information on these modes may be encoded/signaled. In contrast, in the case of a P/B-type slice, only DIMD, TIMD, MRL, and MIP may be used, and information on these modes may be encoded/signaled.

In another embodiment, in the case of an I-type slice, DIMD, TIMD, MRL, MIP, and ISP may be used, and information on these modes may be encoded/signaled. In contrast, in the case of a P/B-type slice, only MRL, MIP, and ISP may be used, and information on these modes may be encoded/signaled.

In another embodiment, in the case of an I-type slice, DIMD, TIMD, MRL, MIP, and ISP may be used, and information on these modes may be encoded/signaled. In contrast, in the case of a P/B-type slice, only DIMD, TIMD, MRL, and MIP may be used, and information on these modes may be encoded/signaled.

Meanwhile, Embodiment 2 of the present disclosure is not limited to the above examples. For example, the available luma intra prediction mode may be separately defined for a P-type slice and a B-type slice.

It is apparent that the embodiments (1) to (3) described above may be applied individually or in combination of two or more.

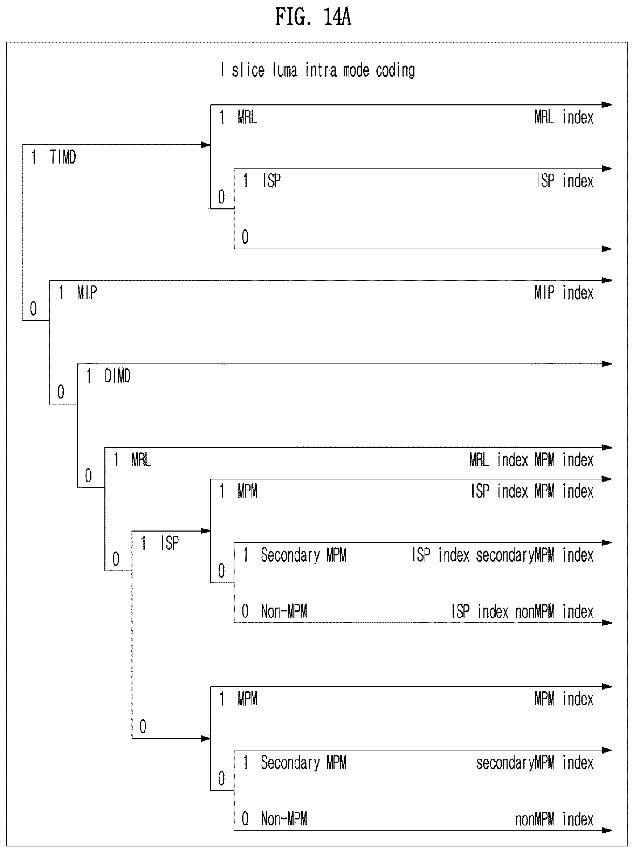

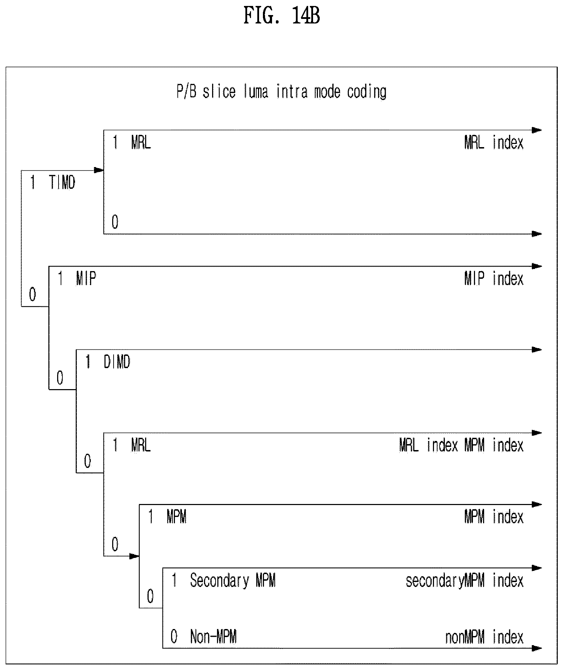

An example of the luma intra prediction mode coding structure according to Embodiment 2 of the present disclosure is as shown in FIG. 14A and FIG. 14B.

Referring to FIG. 14A and FIG. 14B, the luma intra prediction mode may have a different coding structure depending on the slice type. For example, in a P/B-type slice in which an inter-coded block is prioritized (or dominant), the luma intra prediction mode may have a simplified coding structure compared to that in an I-type slice.

Meanwhile, a flag indicating whether intra luma coding tools are applied may be transmitted for each slice type through high-level syntax (HLS) such as VPS, SPS, PPS, Picture header, Slice header, etc. In other words, information for determining whether a specific luma intra mode is applied may be transmitted via various high-level syntax structures such as SPS, APS, PPS, VPS, DPS, Picture header, Slice header, etc. depending on the slice type, or may be transmitted via low-level syntax structures such as CTU, CU, etc.

As described above, according to Embodiment 2 of the present disclosure, the luma intra prediction mode may be encoded/signaled based on the slice type. Accordingly, the coding structure may be further optimized, so that the number of bits may be reduced and signaling overhead may be decreased.

## Embodiment 3

As described above with reference to FIG. 12, the conventional coding structure of a chroma intra prediction mode does not consider slice type-specific attribute at all. As numerous intra coding tools are being newly introduced, it may be necessary to optimize the coding structure to reduce bit rate and improve coding efficiency.

Accordingly, in Embodiment 3 of the present disclosure, a new coding structure is proposed in which a chroma intra prediction mode is adaptively encoded/signaled based on the slice type. The detailed content is as follows.

### (1) Number of GLM filters

The number of GLM filters may vary depending on the slice type of the current slice.

In an embodiment, in the case of an I-type slice, the number of GLM filters may be 4. In contrast, in the case of a P/B-type slice, the number of GLM filters may be 2.

In another embodiment, in the case of an I-type slice, the number of GLM filters may be 4. In contrast, in the case of a P/B-type slice, the number of GLM filters may be 1.

In another embodiment, in the case of an I-type slice, the number of GLM filters may be 4. In contrast, in the case of a P/B-type slice, the number of GLM filters may be 0.

Meanwhile, Embodiment 3 of the present disclosure is not limited to the above examples. For example, the number of GLM filters may be separately defined for a P-type slice and a B-type slice.

### (2) parameter_delta_signaling applied color plane and parameter range

Whether parameter_delta_signaling, which is used to adjust the slope of the linear model in MMLM and LM modes, is applied to each chroma component may vary depending on the slice type of the current slice.

In an embodiment, in the case of an I-type slice, parameter_delta_signaling may be independently encoded/-signaled for Cb and Cr. In contrast, in the case of a P/B-type slice, parameter_delta_signaling may be commonly (i.e., once) encoded/signaled for Cb and Cr.

In another embodiment, in the case of an I-type slice, parameter_delta_signaling may have a parameter range of {-4, -3, -2, -1, 1, 2, 3, 4}. In contrast, in the case of a P/B-type slice, parameter_delta_signaling may have a parameter range of {-3, -1, 1, 3}.

Meanwhile, Embodiment 3 of the present disclosure is not limited to the above examples. For example, parameter_delta_signaling applied color plane and parameter range may be separately defined for a P-type slice and a B-type slice.

**(3) Selective Mode Coding**

A chroma intra prediction mode may be selectively encoded/signaled based on the slice type of the current slice.

In an embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MMLM, GLM, CCCM, and MM-CCCM may be used, and information on these modes may be encoded/signaled.

In another embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MDLM_L, MDLM_T, MMLM, GLM, GLM_L, GLM_T, CCCM, MM-CCCM, and parameter_delta_signaling may be used, and information on these modes may be encoded/signaled.

In another embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MDLM_L, MDLM_T, MMLM_L, MMLM_T, GLM, GLM_L, GLM_T, CCCM, and MM-CCCM may be used, and information on these modes may be encoded/signaled.

In another embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MDLM_L, MDLM_T, MMLM_L, MMLM_T, CCCM, and MM-CCCM may be used, and information on these modes may be encoded/signaled.

In another embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MDLM_L, MDLM_T, MMLM_L, MMLM_T, GLM, CCCM, and MM-CCCM may be used, and information on these modes may be encoded/signaled.

In another embodiment, in the case of an I-type slice, LM, MDLM_L, MDLM_T, MMLM, MMLM_L, MMLM_T, GLM, GLM_L, GLM_T, CCCM, MM-CCCM, and parameter_delta_signaling may be used, and information on these modes may be encoded/signaled. In contrast, in the case of a P/B-type slice, only LM, MMLM, GLM, CCCM, MM-CCCM, and parameter_delta_signaling may be used, and information on these modes may be encoded/signaled.

In another embodiment, in the case of an I-type slice, parameter_delta_signaling may be used for both MMLM and LM, and information on these modes may be encoded/signaled. In contrast, in the case of a P/B-type slice, parameter_delta_signaling may be used only for LM, and information on this mode may be encoded/signaled.

Meanwhile, Embodiment 3 of the present disclosure is not limited to the above examples. For example, available chroma intra prediction mode may be separately defined for a P-type slice and a B-type slice.

It is apparent that the embodiments (1) to (3) described above may be applied individually or in combination of two or more.

An example of the chroma intra prediction mode coding structure according to Embodiment 3 of the present disclosure is as shown in FIG. 15A and FIG. 15B.

Referring to FIG. 15A and FIG. 15B, the chroma intra prediction mode may have a different coding structure depending on the slice type. For example, in a P/B-type slice in which an inter-coded block is prioritized (or dominant), the chroma intra prediction mode may have a simplified coding structure compared to that in an I-type slice.

At least one of the LM, MDLM_L, MDLM_T, MMLM, MMLM_L, MMLM_T, GLM, GLM_L, GLM_T, CCCM, MM-CCCM, or parameter_delta_signaling modes may not be used for a P-type slice and/or a B-type slice, and in this case, the information indicating the corresponding mode may also not be transmitted. To explicitly indicate this, the semantics of the information indicating whether each mode is selected may include the following content.

Taking GLM as an example,

- The GLM flag may selectively indicate whether GLM is used, where a value of 1 may indicate that the GLM mode is applied, and a value of 0 may indicate that the GLM mode is not applied. In addition, for a P/B-type slice, the GLM flag decoding process may not be performed, and its value may be inferred as 0.

Meanwhile, a flag indicating whether intra chroma coding tools are applied may be transmitted for each slice type through high-level syntax (HLS) such as VPS, SPS, PPS, Picture header, Slice header, etc. In other words, information for determining whether a specific chroma intra mode is applied may be transmitted via various high-level syntax structures such as SPS, APS, PPS, VPS, DPS, Picture header, Slice header, etc. depending on the slice type, or may be transmitted via low-level syntax structures such as CTU, CU, etc. Alternatively, after the information on the availability of a specific chroma intra mode is transmitted through a high-level syntax, additional information indicating whether the chroma intra mode is applied may be further transmitted either later in the same syntax or in a lower-level syntax.

As described above, according to Embodiment 3 of the present disclosure, the chroma intra prediction mode may be encoded/signaled based on the slice type. Accordingly, the coding structure may be further optimized, so that the number of bits may be reduced and signaling overhead may be decreased.

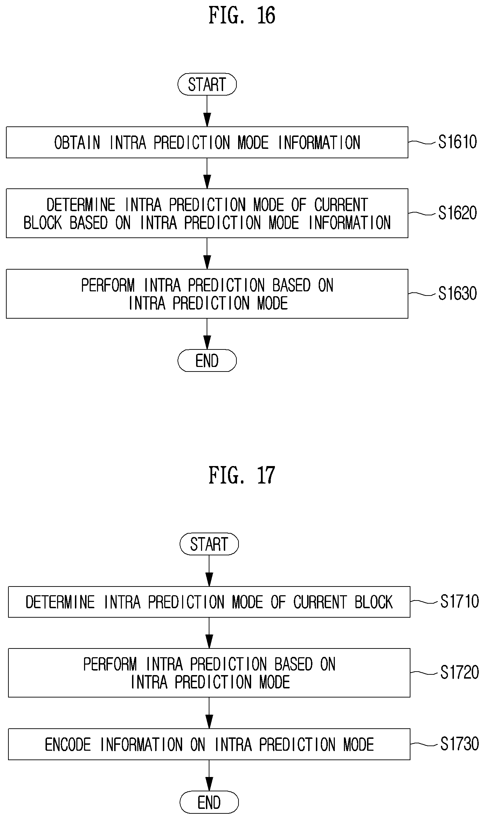

Hereinafter, with reference to FIG. 16 and FIG. 17, a method of encoding/decoding an image according to an embodiment of the present disclosure will be described in detail.

FIG. 16 shows a flowchart of an image decoding method according to an embodiment of the present disclosure. The image decoding method of FIG. 16 may be performed by the image decoding apparatus described in FIG. 3.

Referring to FIG. 16, the image decoding apparatus may obtain intra prediction mode information of a current block S1610, and may determine an intra prediction mode of the current block based on the obtained intra prediction mode information S1620. Then, the image decoding apparatus may perform intra prediction for the current block based on the determined intra prediction mode S1630. In this case, the intra prediction mode information may be differently determined based on the slice type of the current block.

In an embodiment, based on the intra prediction mode of the current block being a Matrix-based Intra Prediction (MIP) mode, the number of candidate modes for the MIP mode may be determined based on the slice type of the current block.

In an embodiment, based on the intra prediction mode of the current block being an Multi-Reference Line (MRL) mode, the number of reference sample lines for the MRL mode may be determined based on the slice type of the current block.

In an embodiment, the intra prediction mode information may include mode information of at least one of available luma intra prediction modes, and the available luma intra prediction modes may be differently determined for each slice type. Specifically, based on the slice type of the current block being an I slice type, the available luma intra prediction modes may include decoder side intra mode derivation (DIMD), template-based intra mode derivation (TIMD), multi-reference line (MRL), matrix-based intra prediction (MIP), and intra sub-partitions (ISP) mode. In contrast, based on the slice type of the current block being a P or B slice type, the available luma intra prediction modes may include only a subset of decoder side intra mode derivation (DIMD), template-based intra mode derivation (TIMD), multi-reference line (MRL), matrix-based intra prediction (MIP), or intra sub-partitions (ISP) mode.

In an embodiment, the intra prediction mode information may be obtained in the order of decoder side intra mode derivation (DIMD), matrix-based intra prediction (MIP), template-based intra mode derivation (TIMD), most probable mode (MPM), secondary MPM, and non-MPM modes.

In an embodiment, based on the intra prediction mode of the current block being a gradient linear model (GLM) mode, the number of filters for the GLM mode may be determined based on the slice type of the current block.

In an embodiment, based on the intra prediction mode of the current block being an linear model (LM) or multi-model linear model (MMLM) mode, the intra prediction mode information may include a slope control parameter for the linear model, and at least one of the applicable color plane range or parameter range for the slope control parameter may be determined based on the slice type of the current block.

In an embodiment, the intra prediction mode information may include mode information of at least one of available chroma intra prediction modes, and the available chroma intra prediction modes may be differently determined for each slice type. Specifically, based on the slice type of the current block being an I slice type, the available chroma intra prediction modes may include linear model (LM), multi-directional linear model (MDLM), multi-model linear model (MMLM), gradient linear model (GLM), convolutional cross-component model (CCCM), and multi-model convolutional cross-component model (MM-CCCM). In contrast, based on the slice type of the current block being a P or B slice type, the available chroma intra prediction modes may include only a subset of linear model (LM), multi-directional linear model (MDLM), multi-model linear model (MMLM), gradient linear model (GLM), convolutional cross-component model (CCCM), or multi-model convolutional cross-component model (MM-CCCM).

FIG. 17 shows a flowchart of an image encoding method according to an embodiment of the present disclosure. The image encoding method of FIG. 17 may be performed by the image encoding apparatus described in FIG. 2.

Referring to FIG. 17, the image encoding apparatus may determine an intra prediction mode of a current block S1710, and may perform intra prediction for the current block based on the determined intra prediction mode S1720. Then, the image encoding apparatus may encode information on the intra prediction mode into a bitstream S1730. In this case, the information on the intra prediction mode may be differently determined based on the slice type of the current block. The specific detail of the intra prediction mode information is as described above.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus or the image decoding apparatus which performs a predetermined operation (step) may perform an operation (step) to check the execution conditions or situations of the corresponding operation (step). For example, when it is described that a predetermined operation is performed when a predetermined condition is satisfied, the image encoding apparatus or the image decoding apparatus may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), general-purpose processors, controllers, microcontrollers, or microprocessors.

Additionally, the image decoding apparatus and the image encoding apparatus to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

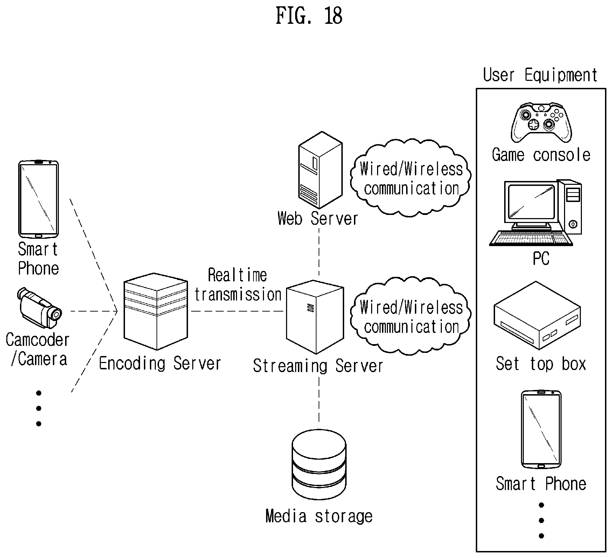

FIG. 18 shows an exemplary diagram of a content streaming system to which an embodiment of the present disclosure may be applied.

As shown in FIG. 18, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, the image decoding method comprising:

 obtaining intra prediction mode information of a current block;
 determining an intra prediction mode of the current block based on the intra prediction mode information; and
 performing intra prediction for the current block based on the intra prediction mode,
 wherein the intra prediction mode information is determined differently based on a slice type of the current block.

2. The image decoding method of claim 1, wherein based on the intra prediction mode of the current block being a Matrix-based Intra Prediction (MIP) mode, a number of candidate modes for the MIP mode is determined based on the slice type of the current block.

3. The image decoding method of claim 1, wherein based on the intra prediction mode of the current block being a Multi-Reference Line (MRL) mode, a number of reference sample lines for the MRL mode is determined based on the slice type of the current block.

4. The image decoding method of claim 1, wherein the intra prediction mode information includes mode information of at least one of available luma intra prediction modes, and
 wherein the available luma intra prediction modes are determined differently for each slice type.

5. The image decoding method of claim 4, wherein based on the slice type of the current block being an I slice type, the available luma intra prediction modes include decoder side intra mode derivation (DIMD), template-based intra mode derivation (TIMD), multi-reference line (MRL), matrix-based intra prediction (MIP), and intra sub-partitions (ISP) modes.

6. The image decoding method of claim 4, wherein based on the slice type of the current block being a P or B slice type, the available luma intra prediction modes include only some of decoder side intra mode derivation (DIMD), template-based intra mode derivation (TIMD), multi-reference line (MRL), matrix-based intra prediction (MIP), or intra sub-partitions (ISP) modes.

7. The image decoding method of claim 1, wherein the intra prediction mode information is obtained in an order of decoder side intra mode derivation (DIMD), matrix-based intra prediction (MIP), template-based intra mode derivation (TIMD), most probable mode (MPM), secondary MPM, and non-MPM modes.

8. The image decoding method of claim 1, wherein based on the intra prediction mode of the current block being a gradient linear model (GLM) mode, a number of filters for the GLM mode is determined based on the slice type of the current block.

9. The image decoding method of claim 1, wherein based on the intra prediction mode of the current block being a linear model (LM) or multi-model linear model (MMLM) mode, the intra prediction mode information includes a slope control parameter of a linear model, and
 wherein at least one of a color plane range or a parameter range to which the slope control parameter is applied is determined based on the slice type of the current block.

10. The image decoding method of claim 1, wherein the intra prediction mode information includes mode information of at least one of available chroma intra prediction modes, and
 wherein the available chroma intra prediction modes are determined differently for each slice type.

11. The image decoding method of claim 10, wherein based on the slice type of the current block being an I slice type, the available chroma intra prediction modes include linear model (LM), multi-directional linear model (MDLM), multi-model linear model (MMLM), gradient linear model (GLM), convolutional cross-component model (CCCM), and multi-model convolutional cross-component model (MM-CCCM).

12. The image decoding method of claim 10, wherein based on the slice type of the current block being a P or B slice type, the available chroma intra prediction modes include only some of linear model (LM), multi-directional linear model (MDLM), multi-model linear model (MMLM), gradient linear model (GLM), convolutional cross-component model (CCCM), or multi-model convolutional cross-component model (MM-CCCM).

13. An image encoding method performed by an image encoding apparatus, the image encoding method comprising:

determining an intra prediction mode of a current block;
performing intra prediction for the current block based on the intra prediction mode; and
encoding information on the intra prediction mode,
wherein the information on the intra prediction mode is determined differently based on a slice type of the current block.

14. A non-transitory computer readable recording medium storing a bitstream generated by the image encoding method of Claim 13.

15. A method for transmitting a bitstream generated by an image encoding method, the image encoding method comprising:

determining an intra prediction mode of a current block;
performing intra prediction for the current block based on the intra prediction mode; and
encoding information on the intra prediction mode,
wherein the information on the intra prediction mode is determined differently based on a slice type of the current block.

FIG.1

10

VIDEO SOURCE
GENERATOR — 11

ENCODER — 12

TRANSMITTER — 13

20

RENDERER — 23

DECODER — 22

RECEIVER — 21

FIG.2

EP 4 604 520 A1

## FIG.3

FIG.4

START

CONSTRUCT MPM LIST — S400

DETERMINE INTRA PREDICTION MODE OF CURRENT BLOCK — S410

ENCODE INTRA PREDICTION MODE INFORMATION
(INCLUDING MPM FLAG, NOT PLANAR FLAG, MPM IDX
AND/OR REMAINING INTRA PREDICTION MODE INFORMATION) — S420

END

FIG. 5

START

OBTAIN INTRA PREDICTION MODE INFORMATION (INCLUDING
MPM FLAG, NOT PLANAR FLAG, MPM IDX AND/OR REMAINING
INTRA PREDICTION MODE INFORMATION) FROM BITSTREAM — S510

CONSTRUCT MPM LIST — S520

DETERMINE INTRA PREDICTION MODE OF CURRENT
BLOCK BASED ON MPM LIST AND INTRA PREDICTION MODE
INFORMATION — S530

END

## FIG. 6

## FIG. 7

the neighboring collocated
reconstructed
Y samples

the neighboring
reconstructed
Cb samples

the neighboring
reconstructed
Cr samples

FIG. 8

luma block          chroma block

FIG. 9

FIG. 10

FIG. 11

# FIG. 12

| | | | | | |
|---|---|---|---|---|---|
| | | 1 | 1 | 1 | 1 MMLM_L |
| | | | | | 0 MMLM_T |
| | | | | 1 GLM T | GLM_IDX |
| | | | 0 MDLM_T | 0 MDLM_T | |
| | | | | 1 GLM_L | GLM_IDX |
| | | | 0 MDLM_L | 0 MDLM_L | |
| 1 cross component | 1 | 0 MMLM | 1 MM-CCCM | | |
| | | | 0 MMLM parameter_delta_signaling | | |
| | 0 normal LM | 1 CCCM | | | |
| | | 0 | 1 GLM | GLM_IDX | |
| | | | 0 LM parameter_delta_signaling | | |
| 0 | 1 | 1 normal Intra mode | 1 normal intra mode+fusion | Intra mode index | |
| | | | 0 normal intra mode | Intra mode index | |
| | | 0 DIMD | 1 DIMD+fusion | | |
| | | | 0 DIMD | | |
| | 0 DM | 1 DM+fusion | | | |
| | | 0 DM | | | |

## FIG. 13

| 1 | TIMD | | | |
|---|---|---|---|---|
| | 1 MRL | | | MRL index |
| | 0 | 1 ISP | | ISP index |
| | | 0 | | |
| 0 | 1 MIP | | | MIP index |
| | 0 | 1 DIMD | | |
| | | 0 | 1 MRL | MRL index MPM index |
| | | | 0 | 1 ISP 1 MPM ISP index MPM index |
| | | | | 0 1 Secondary MPM ISP index secondaryMPM index |
| | | | | 0 Non-MPM ISP index nonMPM index |
| | | | 0 | 1 MPM MPM index |
| | | | | 0 1 Secondary MPM secondaryMPM index |
| | | | | 0 Non-MPM nonMPM index |

FIG. 14A

I slice luma intra mode coding

```
1  TIMD ──────► 1  MRL                                    MRL index ──────►

                0  ┌─ 1  ISP                              ISP index ──────►

                   └─ 0 ──────────────────────────────────────────────►

0  ┌─ 1  MIP                                              MIP index ──────►

   0  ┌─ 1  DIMD ──────────────────────────────────────────────────────►

      0  ┌─ 1  MRL                               MRL index MPM index ──────►

         0  ┌─ 1  MPM                            ISP index MPM index ──────►

            1  ISP ──► 1  Secondary MPM    ISP index secondaryMPM index ──►

                       0  0  Non-MPM          ISP index nonMPM index ──────►

            0  ┌─ 1  MPM                                  MPM index ──────►

               0 ──► 1  Secondary MPM            secondaryMPM index ──────►

                     0  0  Non-MPM                   nonMPM index ──────►
```

# FIG. 14B

## FIG. 15A

I slice luma intra mode coding

## FIG. 15B

## FIG. 16

START

| OBTAIN INTRA PREDICTION MODE INFORMATION | — S1610 |

| DETERMINE INTRA PREDICTION MODE OF CURRENT BLOCK BASED ON INTRA PREDICTION MODE INFORMATION | — S1620 |

| PERFORM INTRA PREDICTION BASED ON INTRA PREDICTION MODE | — S1630 |

END

## FIG. 17

START

| DETERMINE INTRA PREDICTION MODE OF CURRENT BLOCK | — S1710 |

| PERFORM INTRA PREDICTION BASED ON INTRA PREDICTION MODE | — S1720 |

| ENCODE INFORMATION ON INTRA PREDICTION MODE | — S1730 |

END

# FIG. 18

User Equipment

Game console

PC

Set top box

Smart Phone

Web Server

Wired/Wireless communication

Wired/Wireless communication

Smart Phone

Camcoder /Camera

Encoding Server

Realtime transmission

Streaming Server

Media storage

## EP 4 604 520 A1

### INTERNATIONAL SEARCH REPORT

| International application No. |
| --- |
| **PCT/KR2023/015692** |

**A. CLASSIFICATION OF SUBJECT MATTER**

**H04N 19/11**(2014.01)i; **H04N 19/593**(2014.01)i; **H04N 19/186**(2014.01)i; **H04N 19/119**(2014.01)i; **H04N 19/176**(2014.01)i; **H04N 19/70**(2014.01)i; **H04N 19/96**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/103(2014.01); H04N 19/105(2014.01); H04N 19/119(2014.01); H04N 19/124(2014.01); H04N 19/184(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인트라 예측 모드(intra prediction mode), 슬라이스 타입(slice type), MIP(Matrix-based Intra Prediction), MRL(Multi-Reference Line), 가용 루마 인트라 예측 모드(available luma intra prediction mode), GLM(gradient linear model)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2019-0107581 A (ELECTRONICS AND TELECOMMUNICATIONS RESEARCH INSTITUTE et al.) 20 September 2019 (2019-09-20)<br>See paragraphs [0015]-[0021] and [0962]; and claims 1 and 6. | 1-3,13-15 |
| Y | | 4-7,10-12 |
| A | | 8-9 |
| Y | KR 10-2021-0148321 A (WILUS INSTITUTE OF STANDARDS AND TECHNOLOGY INC. et al.) 07 December 2021 (2021-12-07)<br>See paragraph [0017]. | 4-6 |
| Y | KR 10-2022-0027851 A (BYTEDANCE INC.) 08 March 2022 (2022-03-08)<br>See paragraphs [0051], [0387] and [0921]. | 7,10-12 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **22 January 2024** | **22 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/015692**

| C. | DOCUMENTS CONSIDERED TO BE RELEVANT | | |
|---|---|---|
| Category* | Citation of document, with indication, where appropriate, of the relevant passages | Relevant to claim No. |
| A | KR 10-2022-0074954 A (LG ELECTRONICS INC.) 03 June 2022 (2022-06-03)<br>    See paragraphs [0102] and [0204]. | 1-15 |
| A | KR 10-2022-0029589 A (GUANGDONG OPPO MOBILE TELECOMMUNICATIONS CORP., LTD.)<br>08 March 2022 (2022-03-08)<br>    See claim 1. | 1-15 |

Form PCT/ISA/210 (second sheet) (July 2022)

## INTERNATIONAL SEARCH REPORT
### Information on patent family members

International application No.

**PCT/KR2023/015692**

| Patent document cited in search report | | | Publication date (day/month/year) | Patent family member(s) | | | Publication date (day/month/year) |
|---|---|---|---|---|---|---|---|
| KR | 10-2019-0107581 | A | 20 September 2019 | US | 11363260 | B2 | 14 June 2022 |
| | | | | US | 2022-0303528 | A1 | 22 September 2022 |
| KR | 10-2021-0148321 | A | 07 December 2021 | CN | 113785566 | A | 10 December 2021 |
| | | | | US | 2022-0217366 | A1 | 07 July 2022 |
| | | | | WO | 2020-222484 | A1 | 05 November 2020 |
| KR | 10-2022-0027851 | A | 08 March 2022 | CN | 114072849 | A | 18 February 2022 |
| | | | | EP | 3973450 | A1 | 30 March 2022 |
| | | | | EP | 3973450 | A4 | 22 February 2023 |
| | | | | JP | 2023-162203 | A | 08 November 2023 |
| | | | | JP | 7328373 | B2 | 16 August 2023 |
| | | | | US | 11445183 | B2 | 13 September 2022 |
| | | | | US | 2022-0400252 | A1 | 15 December 2022 |
| | | | | WO | 2020-264456 | A1 | 30 December 2020 |
| KR | 10-2022-0074954 | A | 03 June 2022 | CN | 114762350 | A | 15 July 2022 |
| | | | | US | 11825096 | B2 | 21 November 2023 |
| | | | | US | 2022-0272350 | A1 | 25 August 2022 |
| | | | | WO | 2021-091253 | A1 | 14 May 2021 |
| KR | 10-2022-0029589 | A | 08 March 2022 | CN | 114467306 | A | 10 May 2022 |
| | | | | CN | 114786019 | A | 22 July 2022 |
| | | | | EP | 3975565 | A1 | 30 March 2022 |
| | | | | EP | 3975565 | A4 | 27 July 2022 |
| | | | | JP | 2022-539768 | A | 13 September 2022 |
| | | | | US | 2022-0191548 | A1 | 16 June 2022 |
| | | | | WO | 2021-004153 | A1 | 14 January 2021 |

Form PCT/ISA/210 (patent family annex) (July 2022)